# EUROPEAN PATENT APPLICATION

(11) **EP 4 797 557 A1**
(43) Date of publication of application: **26.08.2026**
(21) Application number: 24887494.3
(22) Date of filing: 30.07.2024
(51) Int. Cl.: H04B 7/06

(54) **COMMUNICATION METHOD AND APPARATUS**

(30) Priority: 07.11.2023 CN 202311483100
(71) Applicant: HUAWEI TECHNOLOGIES CO., LTD., Shenzhen, Guangdong 518129 (CN)
(72) Inventor: HE, Jia, Shenzhen, Guangdong 518129 (CN); ZHOU, Zhi, Shenzhen, Guangdong 518129 (CN); AI, Xiaoyu, Shenzhen, Guangdong 518129 (CN)
(74) Representative: Goddar, Heinz J.
(86) International application number: PCT/CN2024/108589
(87) International publication number: WO 2025/097872

(57) **Abstract**

A communication method and apparatus are provided, applied to a sensing system or an integrated sensing and communication system, so that sensing performance can be improved, and also the risk of privacy leakage of a reference unit can be reduced. The method includes: A second node receives first information respectively corresponding to at least one first node; and determines a reference unit based on the first information respectively corresponding to the at least one first node, and sends second information to each of the at least one first node. The first information includes information about the first node and sensing information corresponding to a sensing link, the sensing information includes information about N scatterers and/or information about M scatterer groups, N and M are positive integers, and the first node is a receiving node of a sensing signal on the sensing link. The second information indicates location calibration values/a location calibration value of the scatterer and/or the scatterer group relative to the reference unit.

## Description

This application claims priority to Chinese Patent Application No. 202311483100.X, filed with the China National Intellectual Property Administration on November 7, 2023 and entitled "COMMUNICATION METHOD AND APPARATUS", which is incorporated herein by reference in its entirety.

### TECHNICAL FIELD

Embodiments of this application relate to the communication field, and in particular, to a communication method and apparatus.

### BACKGROUND

Wireless sensing may be understood as a technology in which electromagnetic energy is emitted into space, and information about an object is calculated by using electromagnetic waves reflected by the object in the space. For example, the information about the object may include location, direction, height, velocity, size, trajectory, and the like.

Integrated communication and sensing may be understood as a new type of information processing technology that implements collaboration between a sensing function and a communication function based on software and hardware resource sharing or information sharing. Integrated communication and sensing can effectively improve system spectral efficiency, hardware efficiency, and information processing efficiency. Having the communication function and the sensing function is to be a capability trend of advanced wireless base stations and terminal devices.

In sensing based on a single node (such as a terminal device or a base station), because a communication base station and a terminal device are greatly different from conventional radar/lidar in deployment, mono-static sensing performance (such as a sensing range and sensing accuracy) is greatly limited. To improve sensing performance, sensing data of a plurality of nodes may be fused.

However, a same object sensed by different sensing nodes exhibits specific differences. For example, a location of the object sensed exhibits different changes such as rotations, parallel shifts, and stretch shifts around an actual location.

### SUMMARY

This application provides a communication method and apparatus, to improve sensing performance, and also the risk of privacy leakage of a reference unit can be reduced.

According to a first aspect, a communication method is provided. The method may be performed by a second node, or may be performed by a component of the second node, for example, a processor, a chip, or a chip system of the second node, or may be implemented by a logical module or software that can implement all or some functions of the second node. The method includes: receiving first information respectively corresponding to at least one first node, where the first information includes information about the first node and sensing information corresponding to a sensing link, the sensing information includes information about N scatterers and/or information about M scatterer groups, N and M are positive integers, and the first node is a receiving node of a sensing signal on the sensing link; and determining a reference unit based on the first information respectively corresponding to the at least one first node, and sending second information to each of the at least one first node, where the second information indicates location calibration values/a location calibration value of the scatterer and/or the scatterer group relative to the reference unit.

Based on this solution, the second node may determine a reference unit based on sensing information of at least one node, for example, the reference unit may be a passive object that can be sensed by a plurality of first nodes, and then indicate, to each first node, a location calibration value of a scatterer or a scatterer group determined by the second node relative to the reference unit, so that the first node can perform subsequent sensing/positioning calibration based on the location calibration value, to improve sensing performance. In addition, because an actual location of the reference unit is not directly indicated, a privacy leakage risk of the reference unit can be reduced. When the reference unit is a passive object, a privacy problem can be avoided.

According to a second aspect, a communication method is provided. The method may be performed by a first node, or may be performed by a component of the first node, for example, a processor, a chip, or a chip system of the first node, or may be implemented by a logical module or software that can implement all or some functions of the first node. The method includes: sending first information to a second node, and receiving second information from the second node, where the first information includes information about the first node and sensing information corresponding to a sensing link, the sensing information includes information about N scatterers and/or information about M scatterer groups, N and M are positive integers, the first node is a receiving node of a sensing signal on the sensing link, and the first information is used to determine a reference unit; and the second information indicates location calibration values/a location calibration value of the scatterer and/or the scatterer group relative to the reference unit. For technical effects brought by the second aspect, refer to the technical effects brought by the first aspect. Details are not described herein again.

With reference to the first aspect or the second aspect, in a possible design, the location calibration value includes a distance registration value and/or an angle registration value, and the distance registration value and/or the angle registration value indicate/indicates a coordinate error of the scatterer or the scatterer group.

With reference to the first aspect or the second aspect, in a possible design, the information about the first node includes at least one of the following: an identifier of the sensing link, an identifier of the first node, an identifier of a sending node of the sensing signal on the sensing link, obtaining time information of the sensing information, or configuration information of the first node.

With reference to the first aspect or the second aspect, in a possible design, the information about the scatterer includes at least one of the following: an index of the scatterer, location coordinates of the scatterer, a speed of the scatterer, an angle of arrival or an angle of departure of a sensing signal corresponding to the scatterer, reliability of the scatterer, or a received power of the sensing signal corresponding to the scatterer.

With reference to the first aspect or the second aspect, in a possible design, a correlation between attributes of any two scatterers in the scatterer group is greater than or equal to a preset threshold.

With reference to the first aspect or the second aspect, in a possible design, the attribute of the scatterer includes at least one of the following: location coordinates, a speed, or a direction; and/or the correlation is indicated by at least one of the following: an offset, a covariance, or a Euclidean distance.

With reference to the first aspect or the second aspect, in a possible design, the information about the scatterer group includes at least one of the following: an index of the scatterer group, a location of the scatterer group, a contour of the scatterer group, a speed of the scatterer group, a category of the scatterer group, or an attribute of the scatterer group.

With reference to the first aspect or the second aspect, in a possible design, the contour of the scatterer group is indicated by at least one of the following: location coordinates of a center of the scatterer group, a size of the scatterer group, or a normal direction; or the contour of the scatterer group is indicated by the following information: location coordinates of a plurality of scatterers at vertices in the scatterer group.

With reference to the first aspect or the second aspect, in a possible design, the second information includes information about the reference unit, and the information about the reference unit includes location coordinates of the reference unit.

Based on this possible design, the second node sends the information about the reference unit to the first node, so that the first node can learn of the location calibration value of the scatterer or the scatterer group relative to the reference unit, and therefore perform subsequent sensing calibration, to improve sensing performance. In addition, calculation complexity of the second node can be reduced.

With reference to the first aspect or the second aspect, in a possible design, the information about the reference unit further includes at least one of the following: an identifier of the reference unit, a speed of the reference unit, an angle of arrival or an angle of departure of a sensing signal corresponding to the reference unit, reliability of the reference unit, or a received power of the sensing signal corresponding to the reference unit.

With reference to the first aspect or the second aspect, in a possible design, the second information includes the location calibration value.

Based on this possible design, the second information includes the location calibration value of the scatterer or the scatterer group relative to the reference unit, so that signaling overheads and calculation complexity of the first node can be reduced.

With reference to the first aspect or the second aspect, in a possible design, the location calibration value includes a distance registration value, a yaw angle, a pitch angle, and a roll angle. Location coordinates of a scatterer n on the sensing link and the location coordinates of the reference unit satisfy the following relationship: ${P}_{n}^{i ′} = {T}_{{α}_{n}}^{i} \times {T}_{{β}_{n}}^{i} \times {T}_{{γ}_{n}}^{i} \times \left({P}_{n}^{i}+Δ{P}_{n}^{i}\right)$${P}_{n}^{i}$ represents the location coordinates of the scatterer n, the location coordinates of the scatterer n are location coordinates sensed by the first node, ${P}_{n}^{i ′}$ represents the location coordinates of the reference unit, ${T}_{{α}_{n}}^{i}$ is determined based on the yaw angle, ${T}_{{β}_{n}}^{i}$ is determined based on the pitch angle, ${T}_{{γ}_{n}}^{i}$ is determined based on the roll angle, $Δ {P}_{n}^{i}$ represents the distance registration value, and i is the identifier of the sensing link.

With reference to the first aspect or the second aspect, in a possible design, the yaw angle ${θ}_{{α}_{n}}^{i}$ and ${T}_{{α}_{n}}^{i}$ satisfy: ${T}_{{α}_{n}}^{i} = \left[\begin{matrix}{cosθ}_{{α}_{n}}^{i} & - {sinθ}_{{α}_{n}}^{i} & 0 \\ {sinθ}_{{α}_{n}}^{i} & {cosθ}_{{α}_{n}}^{i} & 0 \\ 0 & 0 & 1\end{matrix}\right]$

Alternatively, the pitch angle ${θ}_{{β}_{n}}^{i}$ and ${T}_{{β}_{n}}^{i}$ satisfy: ${T}_{{β}_{n}}^{i} = \left[\begin{matrix}cos {θ}_{{β}_{n}}^{i} & 0 & - sin {θ}_{{β}_{n}}^{i} \\ 0 & 1 & 0 \\ sin {θ}_{{β}_{n}}^{i} & 0 & cos {θ}_{{β}_{n}}^{i}\end{matrix}\right]$

Alternatively, the roll angle ${θ}_{{γ}_{n}}^{i}$ and ${T}_{{γ}_{n}}^{i}$ satisfy: ${T}_{{γ}_{n}}^{i} = \left[\begin{matrix}1 & 0 & 0 \\ 0 & cos {θ}_{{γ}_{n}}^{i} & - sin {θ}_{{γ}_{n}}^{i} \\ 0 & sin {θ}_{{γ}_{n}}^{i} & cos {θ}_{{γ}_{n}}^{i}\end{matrix}\right]$

According to a third aspect, a communication method is provided. The method may be performed by a sensing node, or may be performed by a component of the sensing node, for example, a processor, a chip, or a chip system of the sensing node, or may be implemented by a logical module or software that can implement all or some functions of the sensing node. The method includes: sending first request information to a mobility management network element, where the first request information is used to request to associate or disassociate a reference unit with or from a first location management network element, and location information of the reference unit is used to compensate for a positioning error; and receiving first response information from the mobility management network element, where the first response information indicates whether association or disassociation of the reference unit is accepted.

Based on this solution, a reference unit may be associated with a location management network element. Because the location information of the reference unit may be used to compensate for the positioning error, when the location management network element performs positioning subsequently, the location information of the reference unit may be used to compensate for the positioning error, to improve positioning accuracy. Alternatively, the reference unit associated with the location management network element may be released, to avoid a case in which the location management network element still uses the location information of the reference unit to compensate for the positioning error when the reference unit is unavailable or the like, causing a decrease in positioning performance.

In a possible design, when the first request information is used to request to associate the reference unit with the first location management network element, the first request information includes a first identifier, and the first identifier is used to identify an association process of the reference unit.

In a possible design, when the first request information is used to request to associate the reference unit with the first location management network element, the first request information further includes at least one of the following: an identifier of the reference unit, a cause for associating the reference unit, sensing reliability of the reference unit, the location information of the reference unit, or a status of the reference unit; and the cause for associating the reference unit includes initial association or association update, and the status of the reference unit includes an on ON state or an off OFF state.

In a possible design, when the first response information indicates that association of the reference unit is accepted, the first response information includes a second identifier, and the second identifier is used for association update of the reference unit of the first location management network element.

In a possible design, when the first response information indicates that association of the reference unit is rejected, the first response information includes a route identifier of a second location management network element.

In a possible design, when the first request information is used to request to disassociate the reference unit from the first location management network element, the first request information includes a second identifier, and the second identifier is an identifier that is returned in an association process of the reference unit and that is used for association update of the reference unit of the first location management network element.

In a possible design, when the first response information indicates that disassociation of the reference unit is accepted, the first response information includes a fourth identifier, and the fourth identifier is a route identifier that is the same as an association identifier returned in the association process of the reference unit.

According to a fourth aspect, a communication method is provided. The method may be performed by a mobility management network element, or may be performed by a component of the mobility management network element, for example, a processor, a chip, or a chip system of the mobility management network element, or may be implemented by a logical module or software that can implement all or some functions of the mobility management network element. The method includes: receiving first request information from a sensing node, where the first request information is used to request to associate or disassociate a reference unit with or from a first location management network element, and location information of the reference unit is used to compensate for a positioning error; and when the sensing node is valid, sending second request information to the first location management network element, where the second request information is used to request to associate or disassociate the reference unit with or from the first location management network element.

Based on this solution, a reference unit may be associated with a location management network element. Because the location information of the reference unit may be used to compensate for the positioning error, when the location management network element performs positioning subsequently, the location information of the reference unit may be used to compensate for the positioning error, to improve positioning accuracy. Alternatively, the reference unit associated with the location management network element may be released, to avoid a case in which the location management network element still uses the location information of the reference unit to compensate for the positioning error when the reference unit is unavailable or the like, causing a decrease in positioning performance.

In a possible design, the method further includes: receiving second response information from the first location management network element, where the second response information indicates whether association or disassociation of the reference unit is accepted; and sending first response information to the sensing node, where the first response information indicates whether association or disassociation of the reference unit is accepted.

In a possible design, when the first request information is used to request to associate the reference unit with the first location management network element, the first request information includes a first identifier, and the first identifier is used to identify an association process of the reference unit.

In a possible design, when the first request information is used to request to associate the reference unit with the first location management network element, the first request information further includes at least one of the following: an identifier of the reference unit, a cause for associating the reference unit, sensing reliability of the reference unit, the location information of the reference unit, or a status of the reference unit; and the cause for associating the reference unit includes initial association or association update, and the status of the reference unit includes an on ON state or an off OFF state.

In a possible design, when the second response information indicates that association of the reference unit is accepted, the second response information includes a second identifier, and the second identifier is used for association update of the reference unit of the first location management network element.

In a possible design, when the second response information indicates that association of the reference unit is rejected, the second response information includes a route identifier of a second location management network element.

In a possible design, when the first request information is used to request to disassociate the reference unit from the first location management network element, the first request information includes a second identifier, and the second identifier is an identifier that is returned in an association process of the reference unit and that is used for association update of the reference unit of the first location management network element.

In a possible design, when the second response information indicates that disassociation of the reference unit is accepted, the second response information includes a third identifier, and the third identifier is an association identifier returned in the association process of the reference unit.

In a possible design, that the sensing node is valid includes: the sensing node has permission for association or disassociation of the reference unit.

According to a fifth aspect, a communication method is provided. The method may be performed by a location management network element/sensing management function network element, or may be performed by a component of the location management network element/sensing management function network element, for example, a processor, a chip, or a chip system of the location management network element/sensing management function network element, or may be implemented by a logical module or software that can implement all or some functions of the location management network element/sensing management function network element. The method includes: receiving second request information from a mobility management network element, where the second request information is used to request to associate or disassociate a reference unit with or from a first location management network element, and location information of the reference unit is used to compensate for a positioning error; and sending second response information to the mobility management network element, where the second response information indicates whether association or disassociation of the reference unit is accepted.

Based on this solution, a reference unit may be associated with a location management network element. Because the location information of the reference unit may be used to compensate for the positioning error, when the location management network element performs positioning subsequently, the location information of the reference unit may be used to compensate for the positioning error, to improve positioning accuracy. Alternatively, the reference unit associated with the location management network element may be released, to avoid a case in which the location management network element still uses the location information of the reference unit to compensate for the positioning error when the reference unit is unavailable or the like, causing a decrease in positioning performance.

In a possible design, when the second request information is used to request to associate the reference unit with the first location management network element, the second request information includes a first identifier, and the first identifier is used to identify an association process of the reference unit.

In a possible design, when the second request information is used to request to associate the reference unit with the first location management network element, the second request information further includes at least one of the following: an identifier of the reference unit, a cause for associating the reference unit, sensing reliability of the reference unit, the location information of the reference unit, or a status of the reference unit; and the cause for associating the reference unit includes initial association or association update, and the status of the reference unit includes an on ON state or an off OFF state.

In a possible design, when the second response information indicates that association of the reference unit is accepted, the second response information includes a second identifier, and the second identifier is used for association update of the reference unit of the first location management network element.

In a possible design, when the second response information indicates that association of the reference unit is rejected, the second response information includes a route identifier of a second location management network element.

In a possible design, when the second request information is used to request to disassociate the reference unit from the first location management network element, the second request information includes a second identifier, and the second identifier is an identifier that is returned in an association process of the reference unit and that is used for association update of the reference unit of the first location management network element.

In a possible design, when the second response information indicates that disassociation of the reference unit is accepted, the second response information includes a third identifier, and the third identifier is an association identifier returned in the association process of the reference unit.

In a possible design, when the second request information is used to request to associate the reference unit with the first location management network element, the method further includes: sending third request information to a network repository network element, where the third request information is used to request to add information about the reference unit to information about the first location management network element.

According to a sixth aspect, a communication method is provided. The method may be performed by a location management network element/sensing management function network element, or may be performed by a component of the location management network element/sensing management function network element, for example, a processor, a chip, or a chip system of the location management network element/sensing management function network element, or may be implemented by a logical module or software that can implement all or some functions of the location management network element/sensing management function network element. The method includes: sending fifth request information to a mobility management network element, where the fifth request information is used to request to disassociate a reference unit associated with a first location management network element, and location information of the reference unit is used to compensate for a positioning error; and receiving fifth response information from the mobility management network element, where the fifth response information indicates that disassociation of the reference unit is accepted.

Based on this solution, the location management network element may initiate disassociation of the reference unit. Therefore, when the location management network element is to be unavailable, the reference unit previously associated with the location management network element may be disassociated, so that a sensing node can associate the reference unit with another location management network element, to assist the another location management network element in performing positioning, thereby improving positioning accuracy.

In a possible design, the fifth request information includes a second identifier, and the second identifier is an identifier that is returned in an association process of the reference unit and that is used for association update of the reference unit of the first location management network element.

In a possible design, the reference unit is a passive object, and/or the location information of the reference unit is obtained based on sensing.

According to a seventh aspect, a communication method is provided. The method may be performed by a location management network element/sensing management function network element, or may be performed by a component of the location management network element/sensing management function network element, for example, a processor, a chip, or a chip system of the location management network element/sensing management function network element, or may be implemented by a logical module or software that can implement all or some functions of the location management network element/sensing management function network element. The method includes: receiving positioning request information used to request to position a target terminal device; obtaining location information of at least one reference unit, where the location information of the reference unit is used to compensate for a positioning error; and determining a location of the target terminal device based on an initial positioning location of the target terminal device, the location information of the at least one reference unit, and location information of at least one radio access network device, where the at least one radio access network device is configured to determine the initial positioning location.

Based on this solution, the location management network element may obtain the location information of the at least one reference unit. Because the location information of the reference unit is used to compensate for the positioning error, the location management network element may calibrate the initial positioning location of the target terminal device by using the location information of the at least one reference unit in combination with the location information of the at least one radio access network device, to improve positioning accuracy.

In a possible design, the at least one reference unit includes a first reference unit, and the first reference unit is a reference unit associated with a first location management network element; and the first reference unit is located in a serving cell of the target terminal device, and/or the first reference unit is a reference unit closest to the initial positioning location in at least one reference unit associated with the first location management network element.

In a possible design, the at least one reference unit includes a second reference unit, and the second reference unit is a reference unit associated with a second location management network element, and obtaining the location information of the at least one reference unit includes: sending, to the second location management network element, eighth request information used to request the location information of the reference unit; and receiving, from the second location management network element, eighth response information including location information of the second reference unit.

In a possible design, the method further includes: sending, to a network repository network element, seventh request information used to request to discover the reference unit; and receiving, from the network repository network element, seventh response information indicating an address of the second location management network element.

In a possible design, the second reference unit is located in the serving cell of the target terminal device, and/or the second reference unit is a reference unit closest to the initial positioning location in at least one reference unit associated with the second location management network element.

With reference to the third aspect, the fourth aspect, the fifth aspect, the sixth aspect, or the seventh aspect, in a possible design, the reference unit is a passive object, and/or the location information of the reference unit is obtained based on sensing.

According to an eighth aspect, a communication apparatus is provided to implement various methods. The communication apparatus includes a corresponding module, unit, or means (means) for implementing the methods. The module, unit, or means may be implemented by hardware, software, or hardware executing corresponding software. The hardware or the software includes one or more modules or units corresponding to a function.

In some possible designs, the communication apparatus may include a processing module and a transceiver module. The processing module may be configured to implement a processing function in any one of the foregoing aspects and the possible implementations of the foregoing aspects. The transceiver module may include a receiving module and a sending module that are respectively configured to implement a receiving function and a sending function in any one of the foregoing aspects and the possible implementations of the foregoing aspects.

In some possible designs, the transceiver module may include a transceiver circuit, a transceiver machine, a transceiver, or a communication interface.

In a possible design, when the communication apparatus is configured to implement the method according to any one of the first aspect and the possible designs of the first aspect,
the transceiver module is configured to receive first information respectively corresponding to at least one first node, where the first information includes information about the first node and sensing information corresponding to a sensing link, the sensing information includes information about N scatterers and/or information about M scatterer groups, N and M are positive integers, and the first node is a receiving node of a sensing signal on the sensing link; the processing module is configured to determine a reference unit based on the first information respectively corresponding to the at least one first node; and the transceiver module is further configured to send second information to each of the at least one first node, where the second information indicates location calibration values/a location calibration value of the scatterer and/or the scatterer group relative to the reference unit.

In a possible design, when the communication apparatus is configured to implement the method according to any one of the second aspect and the possible designs of the second aspect,
the transceiver module is configured to send first information to a second node; and the transceiver module is further configured to receive second information from the second node, where the first information includes information about the first node and sensing information corresponding to a sensing link, the sensing information includes information about N scatterers and/or information about M scatterer groups, N and M are positive integers, the first node is a receiving node of a sensing signal on the sensing link, and the first information is used to determine a reference unit; and the second information indicates location calibration values/a location calibration value of the scatterer and/or the scatterer group relative to the reference unit.

Optionally, the location calibration value includes a distance registration value and/or an angle registration value, and the distance registration value and/or the angle registration value indicate/indicates a coordinate error of the scatterer or the scatterer group.

Optionally, the information about the first node includes at least one of the following: an identifier of the sensing link, an identifier of the first node, an identifier of a sending node of the sensing signal on the sensing link, obtaining time information of the sensing information, or configuration information of the first node.

Optionally, the information about the scatterer includes at least one of the following: an index of the scatterer, location coordinates of the scatterer, a speed of the scatterer, an angle of arrival or an angle of departure of a sensing signal corresponding to the scatterer, reliability of the scatterer, or a received power of the sensing signal corresponding to the scatterer.

Optionally, a correlation between attributes of any two scatterers in the scatterer group is greater than or equal to a preset threshold.

Optionally, the attribute of the scatterer includes at least one of the following: location coordinates, a speed, or a direction; and/or the correlation is indicated by at least one of the following: an offset, a covariance, or a Euclidean distance.

Optionally, the information about the scatterer group includes at least one of the following: an index of the scatterer group, a location of the scatterer group, a contour of the scatterer group, a speed of the scatterer group, a category of the scatterer group, or an attribute of the scatterer group.

Optionally, the contour of the scatterer group is indicated by at least one of the following: location coordinates of a center of the scatterer group, a size of the scatterer group, or a normal direction; or the contour of the scatterer group is indicated by the following information: location coordinates of a plurality of scatterers at vertices in the scatterer group.

Optionally, the second information includes information about the reference unit, and the information about the reference unit includes location coordinates of the reference unit.

Optionally, the information about the reference unit further includes at least one of the following: an identifier of the reference unit, a speed of the reference unit, an angle of arrival or an angle of departure of a sensing signal corresponding to the reference unit, reliability of the reference unit, or a received power of the sensing signal corresponding to the reference unit.

Optionally, the second information includes the location calibration value.

Optionally, the location calibration value includes a distance registration value, a yaw angle, a pitch angle, and a roll angle. Location coordinates of a scatterer n on the sensing link and the location coordinates of the reference unit satisfy the following relationship: ${P}_{n}^{i} ′ = {T}_{{α}_{n}}^{i} \times {T}_{{β}_{n}}^{i} \times {T}_{{γ}_{n}}^{i} \times \left({P}_{n}^{i}+Δ{P}_{n}^{i}\right)$${P}_{n}^{i}$ represents the location coordinates of the scatterer n, the location coordinates of the scatterer n are location coordinates sensed by the first node, ${P}_{n}^{i ′}$ represents the location coordinates of the reference unit, ${T}_{{α}_{n}}^{i}$ is determined based on the yaw angle, ${T}_{{β}_{n}}^{i}$ is determined based on the pitch angle, ${T}_{{γ}_{n}}^{i}$ is determined based on the roll angle, $Δ {P}_{n}^{i}$ represents the distance registration value, and i is the identifier of the sensing link.

Optionally, the yaw angle ${θ}_{{α}_{n}}^{i}$ and ${T}_{{α}_{n}}^{i}$ satisfy: ${T}_{{α}_{n}}^{i} = \left[\begin{matrix}cos {θ}_{{α}_{n}}^{i} & - sin {θ}_{{α}_{n}}^{i} & 0 \\ sin {θ}_{{α}_{n}}^{i} & cos {θ}_{{α}_{n}}^{i} & 0 \\ 0 & 0 & 1\end{matrix}\right] ;$

Alternatively, the pitch angle ${θ}_{{β}_{n}}^{i}$ and ${T}_{{β}_{n}}^{i}$ satisfy: ${T}_{{β}_{n}}^{i} = \left[\begin{matrix}cos {θ}_{{β}_{n}}^{i} & 0 & - sin {θ}_{{β}_{n}}^{i} \\ 0 & 1 & 0 \\ sin {θ}_{{β}_{n}}^{i} & 0 & cos {θ}_{{β}_{n}}^{i}\end{matrix}\right] ;$

Alternatively, the roll angle ${θ}_{{γ}_{n}}^{i}$ and ${T}_{{γ}_{n}}^{i}$ satisfy: ${T}_{{γ}_{n}}^{i} = \left[\begin{matrix}1 & 0 & 0 \\ 0 & {cosθ}_{{γ}_{n}}^{i} & - {sinθ}_{{γ}_{n}}^{i} \\ 0 & {sinθ}_{{γ}_{n}}^{i} & {cosθ}_{{γ}_{n}}^{i}\end{matrix}\right] .$

In a possible design, when the communication apparatus is configured to implement the method according to any one of the third aspect and the possible designs of the third aspect,
the transceiver module is configured to send first request information to a mobility management network element, where the first request information is used to request to associate or disassociate a reference unit with or from a first location management network element, and location information of the reference unit is used to compensate for a positioning error; and the transceiver module is further configured to receive first response information from the mobility management network element, where the first response information indicates whether association or disassociation of the reference unit is accepted.

Optionally, when the first request information is used to request to associate the reference unit with the first location management network element, the first request information includes a first identifier, and the first identifier is used to identify an association process of the reference unit.

Optionally, when the first request information is used to request to associate the reference unit with the first location management network element, the first request information further includes at least one of the following: an identifier of the reference unit, a cause for associating the reference unit, sensing reliability of the reference unit, the location information of the reference unit, or a status of the reference unit; and the cause for associating the reference unit includes initial association or association update, and the status of the reference unit includes an on ON state or an off OFF state.

Optionally, when the first response information indicates that association of the reference unit is accepted, the first response information includes a second identifier, and the second identifier is used for association update of the reference unit of the first location management network element.

Optionally, when the first response information indicates that association of the reference unit is rejected, the first response information includes a route identifier of a second location management network element.

Optionally, when the first request information is used to request to disassociate the reference unit from the first location management network element, the first request information includes a second identifier, and the second identifier is an identifier that is returned in an association process of the reference unit and that is used for association update of the reference unit of the first location management network element.

Optionally, when the first response information indicates that disassociation of the reference unit is accepted, the first response information includes a fourth identifier, and the fourth identifier is a route identifier that is the same as an association identifier returned in the association process of the reference unit.

In a possible design, when the communication apparatus is configured to implement the method according to any one of the fourth aspect and the possible designs of the fourth aspect,
the transceiver module is configured to receive first request information from a sensing node, where the first request information is used to request to associate or disassociate a reference unit with or from a first location management network element, and location information of the reference unit is used to compensate for a positioning error; and when the sensing node is valid, the transceiver module is further configured to send second request information to the first location management network element, where the second request information is used to request to associate or disassociate the reference unit with or from the first location management network element.

Optionally, the transceiver module is further configured to receive second response information from the first location management network element, where the second response information indicates whether association or disassociation of the reference unit is accepted; and the transceiver module is further configured to send first response information to the sensing node, where the first response information indicates whether association or disassociation of the reference unit is accepted.

Optionally, when the first request information is used to request to associate the reference unit with the first location management network element, the first request information includes a first identifier, and the first identifier is used to identify an association process of the reference unit.

Optionally, when the first request information is used to request to associate the reference unit with the first location management network element, the first request information further includes at least one of the following: an identifier of the reference unit, a cause for associating the reference unit, sensing reliability of the reference unit, the location information of the reference unit, or a status of the reference unit; and the cause for associating the reference unit includes initial association or association update, and the status of the reference unit includes an on ON state or an off OFF state.

Optionally, when the second response information indicates that association of the reference unit is accepted, the second response information includes a second identifier, and the second identifier is used for association update of the reference unit of the first location management network element.

Optionally, when the second response information indicates that association of the reference unit is rejected, the second response information includes a route identifier of a second location management network element.

Optionally, when the first request information is used to request to disassociate the reference unit from the first location management network element, the first request information includes a second identifier, and the second identifier is an identifier that is returned in an association process of the reference unit and that is used for association update of the reference unit of the first location management network element.

Optionally, when the second response information indicates that disassociation of the reference unit is accepted, the second response information includes a third identifier, and the third identifier is an association identifier returned in the association process of the reference unit.

Optionally, that the sensing node is valid includes: the sensing node has permission for association or disassociation of the reference unit.

In a possible design, when the communication apparatus is configured to implement the method according to any one of the fifth aspect and the possible designs of the fifth aspect,
the transceiver module is configured to receive second request information from a mobility management network element, where the second request information is used to request to associate or disassociate a reference unit with or from a first location management network element, and location information of the reference unit is used to compensate for a positioning error; and the transceiver module is further configured to send second response information to the mobility management network element, where the second response information indicates whether association or disassociation of the reference unit is accepted.

Optionally, when the second request information is used to request to associate the reference unit with the first location management network element, the second request information includes a first identifier, and the first identifier is used to identify an association process of the reference unit.

Optionally, when the second request information is used to request to associate the reference unit with the first location management network element, the second request information further includes at least one of the following: an identifier of the reference unit, a cause for associating the reference unit, sensing reliability of the reference unit, the location information of the reference unit, or a status of the reference unit; and the cause for associating the reference unit includes initial association or association update, and the status of the reference unit includes an on ON state or an off OFF state.

Optionally, when the second response information indicates that association of the reference unit is accepted, the second response information includes a second identifier, and the second identifier is used for association update of the reference unit of the first location management network element.

Optionally, when the second response information indicates that association of the reference unit is rejected, the second response information includes a route identifier of a second location management network element.

Optionally, when the second request information is used to request to disassociate the reference unit from the first location management network element, the second request information includes a second identifier, and the second identifier is an identifier that is returned in an association process of the reference unit and that is used for association update of the reference unit of the first location management network element.

Optionally, when the second response information indicates that disassociation of the reference unit is accepted, the second response information includes a third identifier, and the third identifier is an association identifier returned in the association process of the reference unit.

Optionally, when the second request information is used to request to associate the reference unit with the first location management network element, the transceiver module is further configured to send third request information to a network repository network element, where the third request information is used to request to add information about the reference unit to information about the first location management network element.

In a possible design, when the communication apparatus is configured to implement the method according to any one of the sixth aspect and the possible designs of the sixth aspect,
the transceiver module is configured to send fifth request information to a mobility management network element, where the fifth request information is used to request to disassociate a reference unit associated with a first location management network element, and location information of the reference unit is used to compensate for a positioning error; and the transceiver module is further configured to receive fifth response information from the mobility management network element, where the fifth response information indicates that disassociation of the reference unit is accepted.

Optionally, the fifth request information includes a second identifier, and the second identifier is an identifier that is returned in an association process of the reference unit and that is used for association update of the reference unit of the first location management network element.

Optionally, the reference unit is a passive object, and/or the location information of the reference unit is obtained based on sensing.

In a possible design, when the communication apparatus is configured to implement the method according to any one of the seventh aspect and the possible designs of the seventh aspect,
the transceiver module is configured to receive positioning request information used to request to position a target terminal device; the processing module is configured to obtain location information of at least one reference unit, where the location information of the reference unit is used to compensate for a positioning error; and the processing module is further configured to determine a location of the target terminal device based on an initial positioning location of the target terminal device, the location information of the at least one reference unit, and location information of at least one radio access network device, where the at least one radio access network device is configured to determine the initial positioning location.

Optionally, the at least one reference unit includes a first reference unit, and the first reference unit is a reference unit associated with a first location management network element; and the first reference unit is located in a serving cell of the target terminal device, and/or the first reference unit is a reference unit closest to the initial positioning location in at least one reference unit associated with the first location management network element.

Optionally, the at least one reference unit includes a second reference unit, and the second reference unit is a reference unit associated with a second location management network element. That the processing module is configured to obtain the location information of the at least one reference unit includes: the processing module is configured to send, to the second location management network element via the transceiver module, eighth request information used to request the location information of the reference unit; and the processing module is further configured to receive, from the second location management network element via the transceiver module, eighth response information including location information of the second reference unit.

Optionally, the transceiver module is further configured to send, to a network repository network element, seventh request information used to request to discover the reference unit; and receive, from the network repository network element, seventh response information indicating an address of the second location management network element.

Optionally, the second reference unit is located in the serving cell of the target terminal device, and/or the second reference unit is a reference unit closest to the initial positioning location in at least one reference unit associated with the second location management network element.

In a possible design, the reference unit is a passive object, and/or the location information of the reference unit is obtained based on sensing.

According to a ninth aspect, a communication apparatus is provided, and includes a processor and a memory. The memory is configured to store computer instructions. When the processor executes the instructions, the communication apparatus is enabled to perform the method according to any one of the aspects.

According to a tenth aspect, a communication apparatus is provided, and includes a processor and a communication interface. The communication interface is configured to communicate with a module outside the communication apparatus, and the processor is configured to execute a computer program or instructions, to enable the communication apparatus to perform the method according to any one of the aspects.

According to an eleventh aspect, a communication apparatus is provided, and includes at least one processor. The processor is configured to execute a computer program or instructions stored in a memory, to enable the communication apparatus to perform the method according to any one of the aspects. The memory may be coupled to the processor, or may be independent of the processor.

According to a twelfth aspect, a communication apparatus is provided (for example, the communication apparatus may be a chip or a chip system). The communication apparatus includes a processor, configured to implement a function according to any one of the first aspect to the seventh aspect.

In some possible designs, the communication apparatus includes a memory, and the memory is configured to store necessary program instructions and data.

In some possible designs, when the apparatus is a chip system, the apparatus may include a chip, or may include a chip and another discrete component.

In a possible design, the communication apparatus according to the eighth aspect to the twelfth aspect may be the second node in the first aspect, or an apparatus included in the second node, for example, a chip or a chip system; the communication apparatus may be the first node in the second aspect, or an apparatus included in the first node, for example, a chip or a chip system; the communication apparatus may be the sensing node in the third aspect, or an apparatus included in the sensing node, for example, a chip or a chip system; the communication apparatus may be the mobility management network element in the fourth aspect, or an apparatus included in the mobility management network element, for example, a chip or a chip system; or the communication apparatus may be the location management network element/sensing management function network element in the fifth aspect, the sixth aspect, or the seventh aspect, or an apparatus included in the location management network element/sensing management function network element, for example, a chip or a chip system.

According to a thirteenth aspect, a communication apparatus is provided. The communication apparatus may be a second node, or may be a module or a unit (for example, a chip, a chip system, or a circuit) in one-to-one correspondence with the method/operation/step/action described in the first aspect in the second node, or may be a module or a unit that can be used with the second node; the communication apparatus may be a first node, or may be a module or a unit (for example, a chip, a chip system, or a circuit) in one-to-one correspondence with the method/operation/step/action described in the second aspect in the first node, or may be a module or a unit that can be used with the first node; the communication apparatus may be a sensing node, or may be a module or a unit (for example, a chip, a chip system, or a circuit) in one-to-one correspondence with the method/operation/step/action described in the third aspect in the sensing node; the communication apparatus may be a mobility management network element, or may be a module or a unit (for example, a chip, a chip system, or a circuit) in one-to-one correspondence with the method/operation/step/action described in the fourth aspect in the mobility management network element; or the communication apparatus may be a location management network element, or may be a module or a unit (for example, a chip, a chip system, or a circuit) in one-to-one correspondence with the method/operation/step/action described in the fifth aspect, the sixth aspect, or the seventh aspect in the location management network element.

It may be understood that, when the communication apparatus provided in any one of the eighth aspect to the thirteenth aspect is a chip, a sending action/function of the communication apparatus may be understood as information output, and a receiving action/function of the communication apparatus may be understood as information input.

According to a fourteenth aspect, a computer-readable storage medium is provided. The computer-readable storage medium stores a computer program or instructions. When the computer program or the instructions are run on a communication apparatus, the communication apparatus is enabled to perform the method according to any one of the first aspect to the seventh aspect.

According to a fifteenth aspect, a computer program product including instructions is provided. When the computer program product runs on a communication apparatus, the communication apparatus is enabled to perform the method according to any one of the first aspect to the seventh aspect.

According to a sixteenth aspect, a communication method is provided. The communication method includes: At least one first node sends first information to a second node. Correspondingly, the second node receives the first information respectively corresponding to the at least one first node, where the first information includes information about the first node and sensing information corresponding to a sensing link, the sensing information includes information about N scatterers and/or information about M scatterer groups, N and M are positive integers, and the first node is a receiving node of a sensing signal on the sensing link. The second node determines a reference unit based on the first information respectively corresponding to the at least one first node, and sends second information to each of the at least one first node. Correspondingly, the at least one first node receives the second information from the second node.

In a possible design, the second node may further implement the method in any possible design of the first aspect, and the first node may further implement the method in any possible design of the second aspect.

According to a seventeenth aspect, a communication method is provided. The communication method includes: A sensing node sends first request information to a mobility management network element. Correspondingly, the mobility management network element receives the first request information from the sensing node. The mobility management network element sends second request information to a first location management network element. Correspondingly, the first location management network element receives the second request information from the mobility management network element, where the first request information and the second request information are used to request to associate or disassociate a reference unit with or from the first location management network element, and location information of the reference unit is used to compensate for a positioning error. The first location management network element sends second response information to the mobility management network element. Correspondingly, the mobility management network element receives the second response information from the first location management network element, and sends first response information to the sensing node, where the first response information and the second response information indicate whether association or disassociation of the reference unit is accepted.

In a possible design, the sensing node may further implement the method in any possible design of the third aspect; the mobility management network element may further implement the method in any possible design of the fourth aspect; and the first location management network element may further implement the method in any possible design of the fifth aspect.

According to an eighteenth aspect, a communication method is provided. The communication method includes: A mobility management network element sends positioning request information to a first location management network element. Correspondingly, the first location management network element receives the request information from the mobility management network element, where the positioning request information is used to request to position a target terminal device. The first location management network element obtains location information of at least one reference unit, and determines a location of the target terminal device based on an initial positioning location of the target terminal device, the location information of the at least one reference unit, and location information of at least one radio access network device, where the location information of the reference unit is used to compensate for a positioning error, and the at least one radio access network device is used to determine the initial positioning location.

In a possible design, the first location management network element may further implement the method in any possible design of the seventh aspect.

According to a nineteenth aspect, a communication system is provided. The communication system may include at least one first node and a second node. The second node is configured to implement the method according to any one of the first aspect and the designs of the first aspect, and the first node is configured to implement the method according to any one of the second aspect and the designs of the second aspect.

According to a twentieth aspect, a communication system is provided. The communication system includes at least one of a sensing node, a mobility management network element, or a location management network element. The sensing node is configured to implement the method according to any one of the third aspect and the designs of the third aspect; the mobility management network element is configured to implement the method according to any one of the fourth aspect and the designs of the fourth aspect; and the location management network element is configured to implement the method according to any one of the fifth aspect, the sixth aspect, or the seventh aspect, and the designs of the fifth aspect, the sixth aspect, or the seventh aspect.

For technical effects brought by any design of the eighth aspect to the twentieth aspect, refer to the technical effects brought by different designs of the first aspect to the seventh aspect. Details are not described herein again.

### BRIEF DESCRIPTION OF DRAWINGS

FIG. 1 is a diagram of an application scenario of a wireless sensing technology according to this application;
FIG. 2 is a diagram of a relationship between sensing performance and a parameter according to this application;
FIG. 3 is a diagram of a mono-static sensing scenario according to this application;
FIG. 4 is a diagram of a bi-static sensing scenario according to this application;
FIG. 5 is a diagram of a PRU-based positioning scenario according to this application;
FIG. 6 is a diagram of a structure of a communication system according to this application;
FIG. 7 is a schematic flowchart of a communication method according to this application;
FIG. 8 is a diagram of a positioning offset according to this application;
FIG. 9 to FIG. 13 each are a schematic flowchart of a communication method according to this application;
FIG. 14 is a diagram of a structure of a communication apparatus according to this application;
FIG. 15 is a diagram of a structure of another communication apparatus according to this application; and
FIG. 16 is a diagram of a structure of still another communication apparatus according to this application.

### DESCRIPTION OF EMBODIMENTS

In the descriptions of this application, unless otherwise specified, the character "/" indicates that associated objects are in an "or" relationship. For example, A/B may represent A or B. The term "and/or" in this application merely describes an association relationship between associated objects and indicates that three relationships may exist. For example, A and/or B may represent three cases: Only A exists, both A and B exist, or only B exists, where A and B may be singular or plural.

In addition, in the descriptions of this application, "a plurality of" means two or more than two unless otherwise specified. "At least one of the following" or a similar expression thereof indicates any combination of these items, including a singular item or any combination of plural items. For example, at least one of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, the word "example" or "for example" is used to represent giving an example, an illustration, or a description. Any embodiment or design solution described as an "example" or "for example" in embodiments of this application should not be explained as being more preferred or having more advantages than another embodiment or design solution. Exactly, use of the terms such as "example" or "for example" is intended to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments in any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, both "if" and "when" mean that corresponding processing is performed in an objective situation, are not intended to limit time, do not require a determining action during implementation, and do not mean any other limitation either.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described herein.

In this application, unless otherwise specified, mutual reference may be made between same or similar parts of embodiments. In various implementations of this application, unless otherwise stated or there is a logic conflict, terms and/or descriptions in different implementations are consistent and may be mutually referenced, and technical features in different implementations may be combined based on an internal logical relationship thereof, to form a new implementation. The following implementations of this application are not intended to limit the protection scope of this application.

A wireless sensing technology may be understood as a technology in which electromagnetic energy is emitted into space, and information about an object is calculated by using electromagnetic waves reflected by the object in the space. In addition, sensing may be used to detect internal and external shapes and structures of the object, and transmission, echo, reflection, and scattering of radio waves may be used to sense and better understand the physical world.

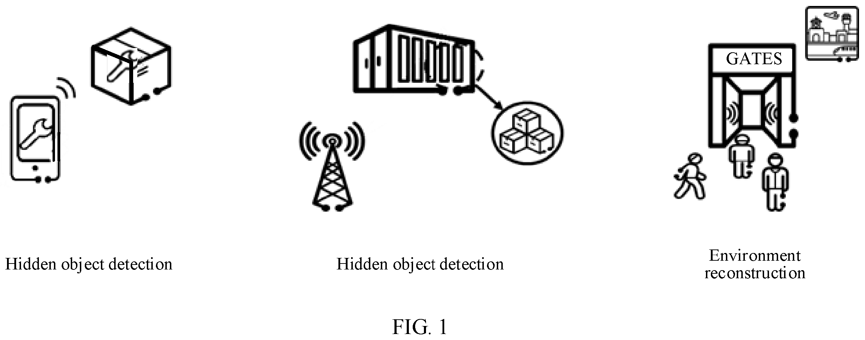

As one of electromagnetic wave sensing technologies, the wireless sensing technology may be used as an important alternative technology in aspects such as security check, hidden object detection, environment reconstruction, and monitoring shown in FIG. 1 due to penetration and security of the wireless sensing technology.

Generally, a sensing target is mainly an active device that can transmit an electromagnetic wave, such as a mobile phone, a vehicle, or an IoT device. Sensing targets in an environment reconstruction scenario further include a passive object such as a building and a city facility (a billboard and a bridge), a traffic condition (a vehicle, a bicycle, and people), and the like. Composition of a space environment may be solved by receiving an electromagnetic signal that is propagated through the space environment, to perform environment reconstruction. Detection and reconstruction of the space environment can assist in positioning or communication performance improvement.

With the increase of user requirements, integrating (integrate) communication and sensing becomes a mainstream trend. Integrated communication and sensing may be understood as a new information processing technology that implements collaboration between a sensing function and a communication function based on software and hardware resource sharing or information sharing. This can effectively improve system spectral efficiency, hardware efficiency, and information processing efficiency. Integrated communication and sensing may also be referred to as integrated sensing and communication (integrated sensing and communication, ISAC) or joint communications and sensing (joint communications and sensing, JCAS). Having the communication function and the sensing function is to be a capability trend of advanced wireless base stations and terminal devices.

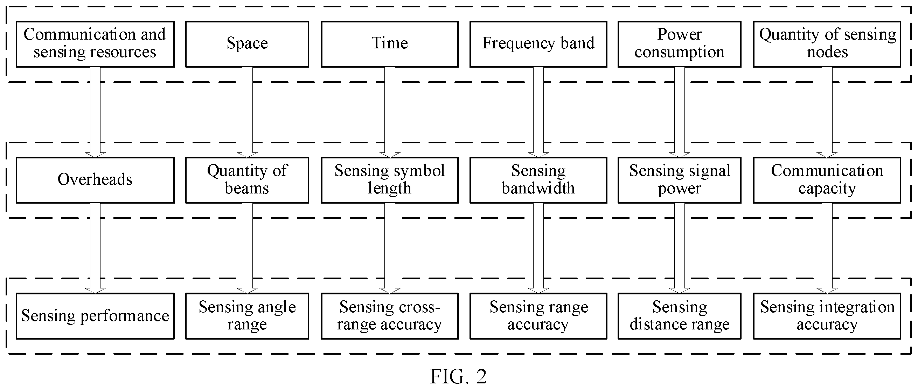

For example, sensing performance is usually related to parameters shown in FIG. 2. Refer to FIG. 2. Overheads of communication and sensing resources affect sensing performance. For example, a space resource (for example, a quantity of beams) may affect a sensing angle range, a time resource (for example, a sensing symbol length) may affect sensing cross-range accuracy, a frequency band resource (for example, a sensing bandwidth) may affect sensing range accuracy, power consumption (for example, a sensing signal power) may affect a sensing distance range, and a quantity of sensing nodes determines a communication and sensing capacity, affecting sensing integration accuracy.

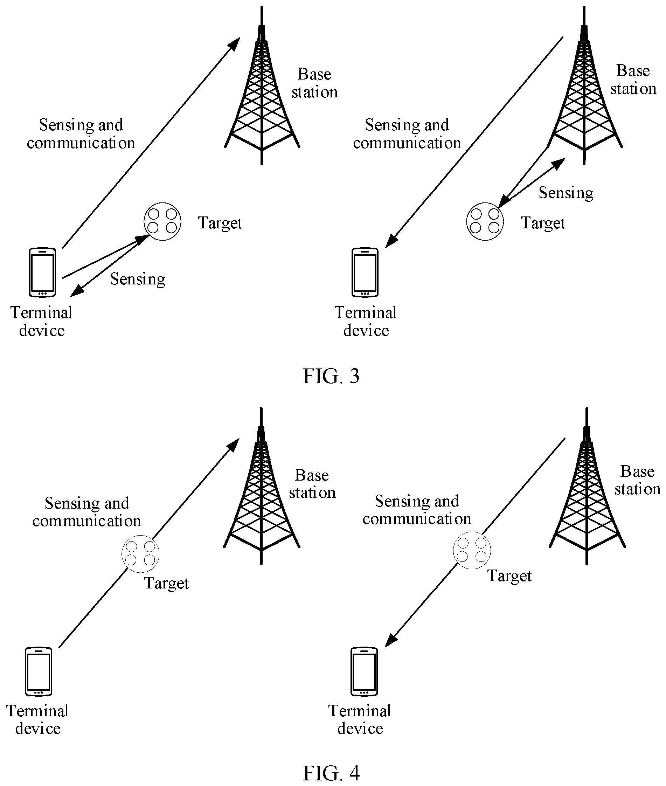

In addition, based on co-location/different locations of a transmitting side and a receiving side of a sensing signal, there may be mono-static (Mono-static) sensing, bi-static (bi-static) sensing, and multi-static (multi-static) sensing. As shown in FIG. 3, a transmitting side and a receiving side of a sensing signal in mono-static sensing are at a same location, and the transmitting side and the receiving side may be the same, for example, a terminal device or a base station. As shown in FIG. 4, a transmitting side and a receiving side of a sensing signal in bi-static sensing are at different locations, and the transmitting side and the receiving side may be different. For example, the transmitting side and the receiving side are respectively a base station and a terminal device, or are respectively a terminal device and a base station. Multi-static sensing may be understood as a hybrid sensing system including mono-static sensing and bi-static sensing.

In mono-static sensing, a data payload may be used for the sensing signal. Therefore, in an integrated sensing communication system, the sensing signal may not consume a communication resource. In addition, because sending and receiving are performed at a same source, there is no problem of non-ideal factors such as synchronization. Therefore, a sensing algorithm has low complexity and high estimation accuracy.

In bi-static sensing, a dedicated pilot or a known signal needs to be used for the sensing signal. Therefore, in the integrated sensing and communication system, the sensing signal needs to consume the communication resource. In addition, because sending and receiving are performed at different sources, there are problems of non-ideal factors such as synchronization and phase noise. Therefore, the sensing algorithm has high complexity and low estimation accuracy.

Further, sensing may be classified into mono-static sensing and multi-static sensing. Mono-static sensing means that only one device senses a surrounding environment. Multi-static sensing means that a plurality of devices sense a surrounding environment at the same time.

In sensing based on a single station (for example, a terminal device or a base station), because a communication base station and a terminal device are greatly different from conventional radar/lidar in deployment, mono-static sensing performance is greatly limited. For example, a sensing distance may be limited due to a low power, an incident angle and accuracy may be limited due to a medium wavelength, and an observed target object may be limited due to a small radar cross section (radar cross section, RCS).

In multi-static sensing, fusion of sensing data of a plurality of stations can improve a sensing range and sensing accuracy. However, in an actual network, a same object sensed by different sensing nodes exhibits specific differences. For example, a location of the same object sensed exhibits different changes such as rotations, parallel shifts, and stretch shifts around an actual location. These differences may be caused by a network synchronization or hardware delay error between a plurality of nodes, a sensing node location error, a sensing node antenna panel (panel) orientation error, a delay and angle estimation error, and the like.

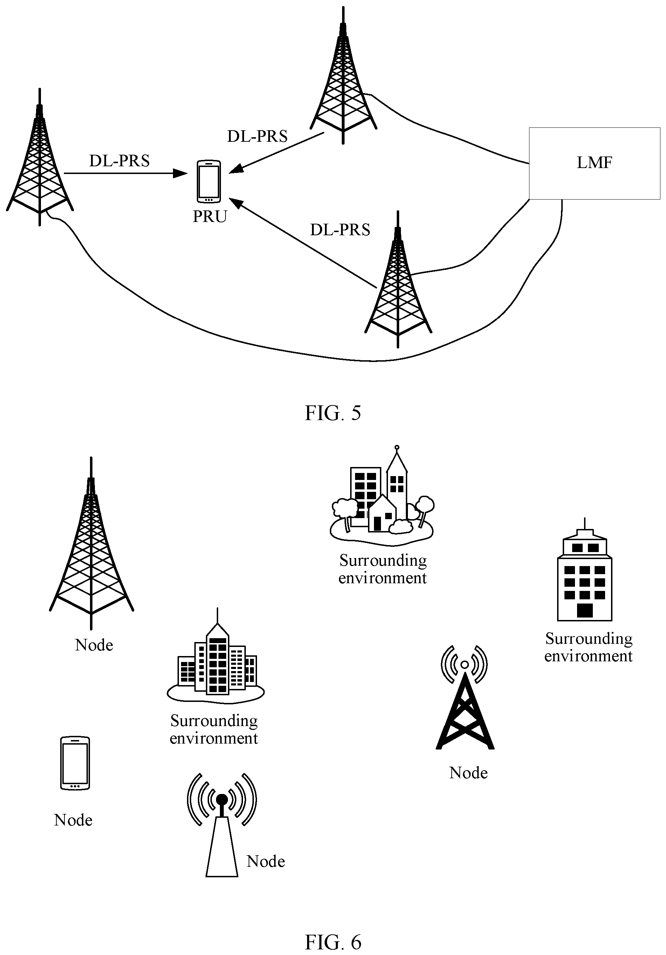

Currently, a positioning reference unit (positioning reference unit, PRU) is proposed in the industry to improve positioning accuracy. As shown in FIG. 5, a plurality of network devices may send a downlink-positioning reference signal (downlink-positioning reference signal, DL-PRS) to a PRU, and the PRU measures the DL-PRS, and reports a measurement result to a location management function (location management function, LMF) via a base station. The measurement result may include a positioning measurement quantity and an actual location of the PRU. The positioning measurement quantity is used to determine a location of the PRU measured by the base station, and may include, for example, an angle of arrival (angle of arrival, AOA), time of arrival (time of arrival, TOA), and the like.

After receiving the measurement result, the LMF may determine the measured location of the PRU based on the positioning measurement quantity, and then determine a synchronization error of each station based on the measured location and the actual location of the PRU, to perform subsequent multi-station positioning optimization of a target terminal device.

However, the PRU is an active device, and a privacy issue is very important to the PRU. The actual location of the PRU is always included in the measurement result, which may cause privacy leakage of the PRU and bring trouble to a user.

Based on this, this application provides a communication method. In the method, a sensing node may determine a reference unit based on sensing information of a plurality of sensing nodes. For example, the reference unit may be a passive object that can be sensed by the plurality of sensing nodes, and then indicate, to each sensing node, a location calibration value of a scatterer or a scatterer group sensed by the sensing node relative to the reference unit, so that the sensing node can perform subsequent sensing/positioning calibration based on the location calibration value, to improve sensing and positioning performance. In addition, because an actual location of the reference unit is not directly indicated, privacy leakage of the reference unit can be reduced. When the reference unit is a passive object, a privacy problem can be avoided.

The technical solutions in embodiments of this application may be used for various communication systems. The communication system may be a 3rd generation partnership project (third generation partnership project, 3GPP) communication system, for example, a long term evolution (long term evolution, LTE) system, a 5th generation (5th generation, 5G) system such as an NR system, a vehicle to everything (vehicle to everything, V2X) system, a system in LTE and 5G hybrid networking, a device-to-device (device-to-device, D2D) communication system, a machine-to-machine (machine-to-machine, M2M) communication system, the internet of things (Internet of Things, IoT), and another next-generation communication system. Alternatively, the communication system may be a non-3GPP communication system. This is not limited.

The communication system applicable to this application is merely an example for description. The communication system and the communication scenario applicable to this application are not limited thereto. The communication system and the communication scenario provided in this application do not constitute any limitation on the solutions of this application. This is stated herein once for all, and is not repeated below.

FIG. 6 shows a communication system according to an embodiment of this application. The communication system includes a plurality of nodes (also referred to as sensing nodes). The node may be an entity having a sensing function and/or a sensing integration function, for example, may be a terminal device, a radio access network device, or a sensing management function (sensing management function, SMF) network element.

In a possible implementation, the plurality of nodes may include one second node and at least one first node. For functions implemented by the first node and the second node, refer to descriptions in subsequent method embodiments. Details are not described herein.

Optionally, the communication system may further include at least one of a mobility management network element, a location management network element, or a network repository network element (not shown in FIG. 6).

Optionally, the terminal device in embodiments of this application may be a device having a wireless transceiver function. The terminal device may also be referred to as user equipment (user equipment, UE), a terminal, an access terminal, a subscriber unit, a subscriber station, a mobile station (mobile station, MS), a remote station, a remote terminal, a mobile terminal (mobile terminal, MT), a user terminal, a wireless communication device, a user agent, a user apparatus, or the like. The terminal device may be, for example, a terminal device in the IoT, V2X, D2D, M2M, a 5G network, a 6th generation (6th generation, 6G), or a future evolved public land mobile network (public land mobile network, PLMN). The terminal may be deployed on land, including an indoor device, an outdoor device, a handheld device, or a vehicle-mounted device; or may be deployed on water (for example, on a ship); or may be deployed in the air (for example, on a plane, a balloon, or a satellite).

For example, the terminal device may be an IoT device (for example, a sensor, an electric meter, or a water meter), a road side unit (road side unit, RSU), a V2X device, a station (station, STA) in a wireless local area network (wireless local area network, WLAN), a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a compute device, another processing device connected to a wireless modem, a vehicle-mounted device, a wearable device (which may also be referred to as a wearable intelligent device), a tablet computer, a computer having a wireless transceiver function, a virtual reality (virtual reality, VR) terminal, a wireless terminal in industrial control (industrial control), a wireless terminal in self driving (self driving), a wireless terminal in telemedicine (remote medical), a wireless terminal in smart grid (smart grid), a wireless terminal in transportation security (transportation safety), a wireless terminal in smart city (smart city), a wireless terminal in smart home (smart home), a vehicle-mounted terminal, a vehicle having a V2V communication capability, an intelligent connected vehicle, an uncrewed aerial vehicle having an uncrewed aerial vehicle to uncrewed aerial vehicle (UAV to UAV, U2U) communication capability, or the like. The terminal may be mobile or fixed. This is not specifically limited in this application.

Optionally, the radio access network device may be a network side device having a wireless transceiver function, or may be a chip or a chip system disposed in the device, and is located in a radio access network (radio access network, RAN) in a mobile communication system, and is configured to provide an access service for the terminal device. The radio access network device may be an evolved NodeB (evolved NodeB, eNB or eNodeB) in an LTE or LTE-advanced (LTE-Advanced, LTE-A) system, for example, a conventional macro base station eNB and a micro base station eNB in a heterogeneous network scenario; or may be a next generation NodeB (next generation NodeB, gNodeB or gNB) in a 5G system or a node in a future communication system such as 6G; or may be a transmission reception point (transmission reception point, TRP); or may be a base station in a future evolved PLMN; or may be a broadband network service gateway (broadband network gateway, BNG), an aggregation switch, or a non-3GPP access device; or may be a radio controller in a cloud radio access network (cloud radio access network, CRAN); or may be an access point (access point, AP) in a Wi-Fi system; or may be a wireless relay node or a wireless backhaul node; or may be a device that implements a base station function in the IoT, V2X, D2D, or M2M. This is not specifically limited in embodiments of this application. For example, the base station in embodiments of this application may include base stations in various forms, for example, a macro base station, a micro base station (which is also referred to as a small cell), a relay station, and an access point. This is not specifically limited in embodiments of this application.

In some scenarios, the radio access network device may alternatively be a module or a unit that can implement some or all functions of the base station. For example, the radio access network device may be a central unit (central unit, CU), a distributed unit (distributed unit, DU), a CU and a DU, a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, the radio access network device may be a radio access network device or a module of the radio access network device in an open radio access network (open RAN, ORAN) system. In the ORAN system, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module.

In some scenarios, the radio access network device may also be referred to as a RAN node, a RAN device, or an access network device, or the radio access network device may be named in another manner. This is not specifically limited in this application.

Optionally, the mobility management network element is mainly responsible for mobility management in a mobile network, for example, user location update, registration of a user with a network, and user switching. In the 5G system, the mobility management network element may be an access and mobility management function (access and mobility management function, AMF) network element. In the future mobile communication system, the mobility management network element may still be the AMF network element, or may have another name. This is not limited.

Optionally, the location management network element is configured to perform location management, for example, determine a location of a target. In the 5G system, the location management network element may be an LMF network element. In the future mobile communication system, the location management network element may still be the LMF network element, or may have another name. This is not limited.

Optionally, the network repository network element supports service discovery, may receive an NF discovery request from a network function (network function, NF), and return information about a discovered NF instance. In the 5G system, the network repository network element may be a network repository function (network repository function, NRF) network element. In the future mobile communication system, the network repository network element may still be the NRF network element, or may have another name. This is not limited.

The following describes in detail the communication method provided in embodiments of this application with reference to the accompanying drawings. It may be understood that in embodiments of this application, each node or network element may perform some or all of the steps in embodiments of this application. These steps or operations are merely examples. In embodiments of this application, other operations or variations of various operations may be further performed. In addition, the steps may be performed in a sequence different from that presented in embodiments of this application, and not all operations in embodiments of this application may be necessarily performed.

It should be noted that names of messages between devices, names of parameters in the messages, or the like in the following embodiments of this application are merely examples, and the names thereof may be other names in specific implementation. This is not specifically limited in embodiments of this application.

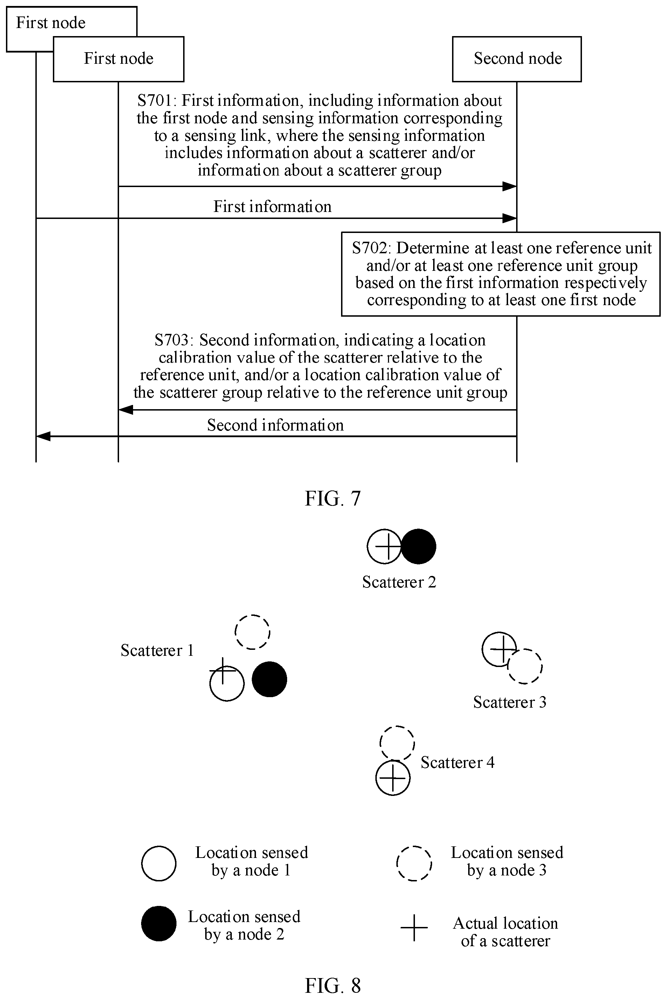

FIG. 7 is a schematic flowchart of a communication method according to an embodiment of this application. The communication method includes the following steps.

S701: A first node sends first information to a second node. Correspondingly, the second node receives the first information from the first node.

It should be noted that in this embodiment of this application, there may be a plurality of first nodes, and each first node may sense a surrounding environment, and may send first information to the second node. In FIG. 7, two first nodes are used as an example for description. first information sent by different first nodes includes a same parameter type or field, and the same parameter type or field may have different values. Implementation of the first node provided in this embodiment of this application is applicable to each first node.

The first information includes information about the first node and sensing information corresponding to a sensing link. The sensing information includes information about N scatterers (scatter information) and/or information about M scatterer groups (scatter group information), where N and M are positive integers. The first node is a receiving node of a sensing signal on the sensing link.

For example, the sensing link may be a link between a sending node and the receiving node of the sensing signal. A same node may serve as a receiving node or a sending node on different sensing links. There may be a plurality of scatterers or scatterer groups on the sensing link. The sensing information corresponding to the sensing link includes the information about the N scatterers and/or the information about the M scatterer groups on the sensing link.

In a possible implementation, the scatterer in this embodiment of this application may also be understood or replaced with a scattering point in the scatterer. For example, if the scatterer may be an outer wall surface of a building, the scattering point in the scatterer may be a scattering point in the wall surface; or if the scatterer is a car door, the scattering point may be a scattering point in the car door.

In a possible implementation, the scatterer group includes a plurality of scatterers, or the scatterer group may mean that because parameters are similar or based on a specific standard, several scatterers are combined into a scatterer group that may be indicated by a group of parameters.

A correlation between attributes of any two scatterers in the scatterer group is greater than or equal to a preset threshold. For example, the attribute of the scatterer includes at least one of the following: location coordinates (for example, three-dimensional coordinates), a speed, or a direction. The correlation between the attributes may be indicated by an offset, a covariance, a Euclidean distance, or the like.

For example, when a plurality of scatterers may be considered as a plurality of observation results on one target (for example, the plurality of scatterers may be different car doors, the front of the car, and the rear of the car on a same car respectively) because variance values of parameters such as three-dimensional coordinates, a speed, and a direction are small, the plurality of scatterers may be combined into one scatterer group, or the scatterer group may be understood as a polyhedron or a polygon formed by the plurality of scatterers. A group of three-dimensional coordinates, a speed, and a direction may indicate information about the scatterer in the scatterer group.

For example, attributes of scatterers in a same scatterer group have a large correlation, for example, may be similar. Attributes of scatterers belonging to different scatterer groups have a small correlation, for example, are greatly different.

In a possible implementation, the information about the first node includes at least one of the following: an identifier of the sensing link (where the first node is the receiving node of the sensing signal on the sensing link), an identifier of the first node, an identifier of the sending node of the sensing signal on the sensing link, obtaining time information of the sensing information, or configuration information of the first node.

For example, the sensing information refers to the sensing information corresponding to the sensing link. The obtaining time information of the sensing information may be a timestamp, and may indicate that the first node senses the N scatterers and/or the M scatterer groups at the timestamp.

For example, the configuration information of the first node may include a sensing capability, a communication capability, an operation capability, an antenna direction, or the like of the first node. The sensing capability of the first node may include a coverage area of the first node, and the like; and the communication capability of the first node may include a communication capacity of the first node, and the like.

In a possible implementation, the information about the scatterer includes at least one of the following: an index of the scatterer, location coordinates of the scatterer, a speed of the scatterer, an angle, reliability, and a power.

For example, the location coordinates of the scatterer may be three-dimensional coordinates, including but not limited to Cartesian coordinates (x, y, z), polar coordinates (r, Q, ψ), and the like. Other coordinate systems that may indicate location information is also applicable. The angle may be an angle of arrival or an angle of departure of a sensing signal corresponding to the scatterer. The power may be a received power of the sensing signal corresponding to the scatterer. Because the first node is a receiver of the sensing signal on the sensing link, the first node may determine the information about the scatterer based on an echo signal of the sensing signal.

For example, when the first node senses the N scatterers, information or parameters included in the first information may be shown in Table 1.

**Table 1**

| Information about a first node | Identifier of a sensing link, identifier of the first node, identifier of a sending node of a sensing signal on the sensing link, obtaining time information of sensing information, and configuration information of the first node |
|---|---|
| Scatterer 1 | Index of the scatterer, location coordinates of the scatterer, speed of the scatterer, angle of the scatterer, reliability of the scatterer, and power of the scatterer |
| Scatterer 2 | Index of the scatterer, location coordinates of the scatterer, speed of the scatterer, angle of the scatterer, reliability of the scatterer, and power of the scatterer |
| ... | |
| Scatterer N | Index of the scatterer, location coordinates of the scatterer, speed of the scatterer, angle of the scatterer, reliability of the scatterer, and power of the scatterer |

Optionally, when there are a plurality of first nodes, each first node may send information shown in Table 1 to the second node. However, it should be noted that, for a same scatterer, location coordinates sensed by different first nodes may have an offset.

For example, as shown in FIG. 8, an example in which three first nodes (a node 1, a node 2, and a node 3) perform sensing is used. A cross pattern in FIG. 8 indicates an actual location of a scatterer, and locations of the scatterer sensed by the node 1, the node 2, and the node 3 may be locations shown by circles. That is, for different first nodes, location coordinates sensed by the different first nodes may be different.

In a possible implementation, the information about the scatterer group includes at least one of the following: an index of the scatterer group, a location of the scatterer group, a contour of the scatterer group, a speed of the scatterer group, a category (category) of the scatterer group, or an attribute of the scatterer group.

For example, the location of the scatterer group may be indicated by location coordinates of a center of the scatterer group. The location coordinates may be three-dimensional coordinates, including but not limited to Cartesian coordinates (x, y, z), polar coordinates (r, Q, ψ), and the like. The contour of the scatterer group may be indicated by at least one of the following: the location coordinates of the center (center) of the scatterer group, a size (size) of the scatterer group, or a normal direction (nor direction); or the contour of the scatterer group may be indicated by location coordinates of a plurality of scatterers at vertices in the scatterer group.

For example, the category of the scatterer group may indicate a type of the scatterer group, for example, category information such as a car or a bicycle. The attribute of the scatterer group includes texture, a color, polarization, a material, or the like.

For example, when the first node senses the M scatterer groups, information or parameters included in the first information may be shown in Table 2.

**Table 2**

| Information about a first node | Identifier of a sensing link, identifier of the first node, identifier of a sending node of a sensing signal on the sensing link, obtaining time information of sensing information, and configuration information of the first node |
|---|---|
| Scatterer group 1 | Index, location, contour (location coordinates of a center, size, and normal direction; or location coordinates of vertices), speed, category, and attribute of the scatterer group |
| Scatterer group 2 | Index, location, contour (location coordinates of a center, size, and normal direction; or location coordinates of vertices), speed, category, and attribute of the scatterer group |
| ... | |
| Scatterer M | Index, location, contour (location coordinates of a center, size, and normal direction; or location coordinates of vertices), speed, category, and attribute of the scatterer group |

S702: The second node determines at least one reference unit and/or at least one reference unit group based on the first information respectively corresponding to the at least one first node.

In a possible implementation, the reference unit is a passive object, for example, a passive object that can be sensed by a plurality of nodes. The passive object may be an object that does not have an electromagnetic wave emission capability. The reference unit may be one of scatterers sensed by the first node. The reference unit group includes a plurality of reference units. For a definition of the reference unit group, refer to the definition of the scatterer group. Details are not described herein again.

For example, in S702, a quantity of reference units determined by the second node is less than or equal to a quantity of scatterers sensed by the at least one first node. A quantity of reference unit groups is less than or equal to a quantity of scatterer groups sensed by the at least one first node.

For example, the reference unit may also be referred to as a sensing reference unit (sensing reference unit, SRU) or a passive anchor (passive anchor), and the three expressions are interchangeable or there is another name. This is not limited in this application. The reference unit group may also be referred to as an SRU group or a passive anchor group, and the two expressions are interchangeable or there is another name. This is not limited in this application.

In a possible implementation, the second node may perform multi-station fusion processing on the first information respectively corresponding to the at least one first node, to obtain information about the at least one reference unit and/or information about the at least one reference unit group. For example, based on the example shown in FIG. 8, the second node may determine actual location coordinates of a scatterer 1 based on location coordinates of the scatterer 1 sensed by the node 1, the node 2, and the node 3, and use the scatterer 1 as a reference unit 1; or determine actual location coordinates of a scatterer 2 based on location coordinates of the scatterer 2 sensed by the node 1 and the node 2, and use the scatterer 2 as a reference unit 2; or respectively determine actual location coordinates of a scatterer 3 and actual location coordinates of a scatterer 4 based on location coordinates of the scatterer 3 and location coordinates of the scatterer 4 sensed by the node 1 and the node 3, and use the scatterer 3 and the scatterer 4 as a reference unit 3 and a reference unit 4.

The information about the reference unit includes location coordinates of the reference unit, and may further include at least one of the following : an identifier of the reference unit, a speed of the reference unit, an angle of arrival or an angle of departure of a sensing signal corresponding to the reference unit, reliability of the reference unit, or a received power of the sensing signal corresponding to the reference unit. For the information about the reference unit group, refer to the foregoing descriptions of the information about the scatterer group. Details are not described herein again.

S703: The second node sends second information to each of the at least one first node. Correspondingly, the first node receives the second information from the second node.

The second information indicates a location calibration value of the scatterer relative to the reference unit, and/or a location calibration value of the scatterer group relative to the reference unit group.

An example in which the second information indicates the location calibration value of the scatterer relative to the reference unit is used. For example, sensing information sent by a first node in step S701 includes information about N scatterers and the second node determines K reference units in step S702. The second information may indicate a location calibration value of a scatterer *n* relative to a reference unit *k*, where *n* = 1,2, ... , *N* and *k* = 1,2, ... , *K*. Alternatively, the second information may indicate a location calibration value of the scatterer *n* relative to a specific reference unit, where *n* = 1,2, ... , *N*. Information about the specific reference unit is determined based on information about the scatterer *n* sensed by a plurality of first nodes. For example, based on the example shown in FIG. 8, the second information may indicate a location calibration value of the scatterer 1 relative to the reference unit 1, a location calibration value of the scatterer 2 relative to the reference unit 2, and the like.

For an implementation in which the second information indicates the location calibration value of the scatterer group relative to the reference unit group, refer to the implementation in which the second information indicates the location calibration value of the scatterer relative to the scatterer group. Details are not described herein again.

It may be understood that the second information sent by the second node to different first nodes includes a same parameter type or field, and the same parameter type or field may have different values. For example, based on the example shown in FIG. 8, the second information sent by the second node to the node 1 indicates a location calibration value of the scatterer 1 sensed by the node 1 relative to the reference unit 1, and the second information sent to the node 2 indicates a location calibration value of the scatterer 1 sensed by the node 2 relative to the reference unit 1. The two location calibration values may be different.

In a possible implementation, the location calibration value may include a distance registration value and/or an angle registration value. The distance registration value and/or the angle registration value indicate/indicates a coordinate error of the scatterer or the scatterer group. That is, the location calibration value may indicate the coordinate error of the scatterer or the scatterer group. For example, the distance registration value may be indicated by a delay, and the angle registration value may include at least one of a yaw angle, a pitch angle, or a roll angle.

For example, the location calibration value may also be referred to as a location offset, a location error, or the like, and the three expressions are interchangeable. Certainly, the location calibration value may have another name. This is not specifically limited in this application.

In a possible implementation, the second information includes the information about the at least one reference unit and/or the information about the at least one reference unit group. For the information about the reference unit and/or the information about the reference unit group, refer to the related descriptions in step S702. Details are not described herein again.

Optionally, in this possible implementation, after receiving the second information, the first node may determine, based on the information about the reference unit and/or the information about the reference unit group and the sensing information that is obtained by the first node, the location calibration value of the scatterer relative to the reference unit and/or the location calibration value of the scatterer group relative to the reference unit group.

Further, the first node may further indicate, to the second node, the location calibration value of the scatterer relative to the reference unit and/or the location calibration value of the scatterer group relative to the reference unit group that are/is determined by the first node.

In another possible implementation, the second information may include the location calibration value of the scatterer relative to the reference unit, and/or the location calibration value of the scatterer group relative to the reference unit group.

In a possible implementation, when the location calibration value includes the distance registration value, the yaw angle, the pitch angle, and the roll angle, location coordinates of the scatterer n on the sensing link and location coordinates of the reference unit satisfy the following relationship: ${P}_{n}^{i} ′ = {T}_{{α}_{n}}^{i} \times {T}_{{β}_{n}}^{i} \times {T}_{{γ}_{n}}^{i} \times \left({P}_{n}^{i}+Δ{P}_{n}^{i}\right)$ ${P}_{n}^{i}$ represents the location coordinates of the scatterer n, and the location coordinates of the scatterer n are location coordinates sensed by the first node. ${P}_{n}^{i} ′$ represents the location coordinates of the reference unit, ${T}_{{α}_{n}}^{i}$ is determined based on the yaw angle, ${T}_{{β}_{n}}^{i}$ is determined based on the pitch angle, ${T}_{{γ}_{n}}^{i}$ is determined based on the roll angle, and Δ*Pₙ* represents the distance registration value. For example, ${T}_{{α}_{n}}^{i} , {T}_{{β}_{n}}^{i}$, and ${T}_{{γ}_{n}}^{i}$ may be collectively referred to as a coordinate change matrix.

For example, the yaw angle ${θ}_{{α}_{n}}^{i}$ and ${T}_{{α}_{n}}^{i}$ satisfy the following relationship: ${T}_{{α}_{n}}^{i} = \left[\begin{matrix}{cosθ}_{{α}_{n}}^{i} & - {sinθ}_{{α}_{n}}^{i} & 0 \\ {sinθ}_{{α}_{n}}^{i} & {cosθ}_{{α}_{n}}^{i} & 0 \\ 0 & 0 & 1\end{matrix}\right]$

For example, the pitch angle ${θ}_{{β}_{n}}^{i}$ and ${T}_{{β}_{n}}^{i}$ satisfy the following relationship: ${T}_{{β}_{n}}^{i} = \left[\begin{matrix}{cosθ}_{{β}_{n}}^{i} & 0 & - {sinθ}_{{β}_{n}}^{i} \\ 0 & 1 & 0 \\ {sinθ}_{{β}_{n}}^{i} & 0 & {cosθ}_{{β}_{n}}^{i}\end{matrix}\right]$

For example, the roll angle ${θ}_{{γ}_{n}}^{i}$ and ${T}_{{γ}_{n}}^{i}$ satisfy the following relationship: ${T}_{{γ}_{n}}^{i} = \left[\begin{matrix}1 & 0 & 0 \\ 0 & {cosθ}_{{γ}_{n}}^{i} & - {sinθ}_{{γ}_{n}}^{i} \\ 0 & {sinθ}_{{γ}_{n}}^{i} & {cosθ}_{{γ}_{n}}^{i}\end{matrix}\right]$

In a possible implementation, after receiving the second information, the first node may learn of the location calibration value based on the second information, and calibrate a subsequent sensing result by using the location calibration value.

For example, for example, the first node senses coordinates ${P}_{n}^{i} = \left({x}_{n}^{i}, {y}_{n}^{i}, {z}_{n}^{i}\right)$ of the scatterer n on the sensing link i, and the first node may perform calibration by using a location calibration value, to obtain new coordinates ${P}_{n}^{i} ′ = \left({x}_{n}^{i}′{y}_{n}^{i}′,{z}_{n}^{i}′\right)$ of the scatterer n, where ${P}_{n}^{i} ′ = {T}_{{α}_{n}}^{i} \times {T}_{{β}_{n}}^{i} \times {T}_{{γ}_{n}}^{i} \times \left({P}_{n}^{i}+Δ{P}_{n}^{i}\right)$ .

Further, a set of coordinates of the scatterer n on I sensing links may be represented as: ${P}_{n} = {\sum }_{i = 1}^{I} {T}_{{α}_{n}}^{i} \times {T}_{{β}_{n}}^{i} \times {T}_{{γ}_{n}}^{i} \times \left({P}_{n}^{i}+Δ{P}_{n}^{i}\right)$

A set of coordinates of all scatterers on the I sensing links may be represented as: ${P}_{all} = {\sum }_{n = 1}^{N} {\sum }_{i = 1}^{I} {T}_{{α}_{n}}^{i} \times {T}_{{β}_{n}}^{i} \times {T}_{{γ}_{n}}^{i} \times \left({P}_{n}^{i}+Δ{P}_{n}^{i}\right)$

When angle changes of various scatterers on an i^{th} sensing link are consistent, that is, ${T}_{{α}_{1}}^{i} = {T}_{{α}_{n}}^{i} = {T}_{{α}_{N}}^{i} , {T}_{{β}_{1}}^{i} = {T}_{{β}_{n}}^{i} = {T}_{{β}_{N}}^{i}$, and ${T}_{{γ}_{1}}^{i} = {T}_{{γ}_{n}}^{i} = {T}_{{γ}_{N}}^{i}$, *Pₐₗₗ* may be transformed into: ${P}_{all} = {\sum }_{n = 1}^{N} {\sum }_{i = 1}^{I} {T}_{α}^{i} \times {T}_{β}^{i} \times {T}_{γ}^{i} \times \left({P}_{n}^{i}+Δ{P}_{n}^{i}\right)$ ${T}_{α}^{i} = {T}_{{α}_{n}}^{i} , {T}_{β}^{i} = {T}_{{β}_{n}}^{i} , and {T}_{γ}^{i} = {T}_{{γ}_{n}}^{i} .$

Based on the foregoing solution, the second node may determine a reference unit based on sensing information of at least one node, for example, the reference unit may be a passive object that can be sensed by a plurality of first nodes, and then indicate, to each first node, a location calibration value of a scatterer or a scatterer group determined by the second node relative to the reference unit, so that the first node can perform subsequent sensing/positioning calibration based on the location calibration value, to improve sensing performance. In addition, because an actual location of the reference unit is not directly indicated, privacy leakage of the reference unit can be reduced. When the reference unit is a passive object, a privacy problem can be avoided.

The foregoing describes determining of the reference unit. The following describes an application of the reference unit in a sensing/positioning scenario. For example, the application of the reference unit in the sensing/positioning scenario may include association of the reference unit, disassociation of the reference unit, and reference unit-assisted positioning. The following separately provides descriptions.

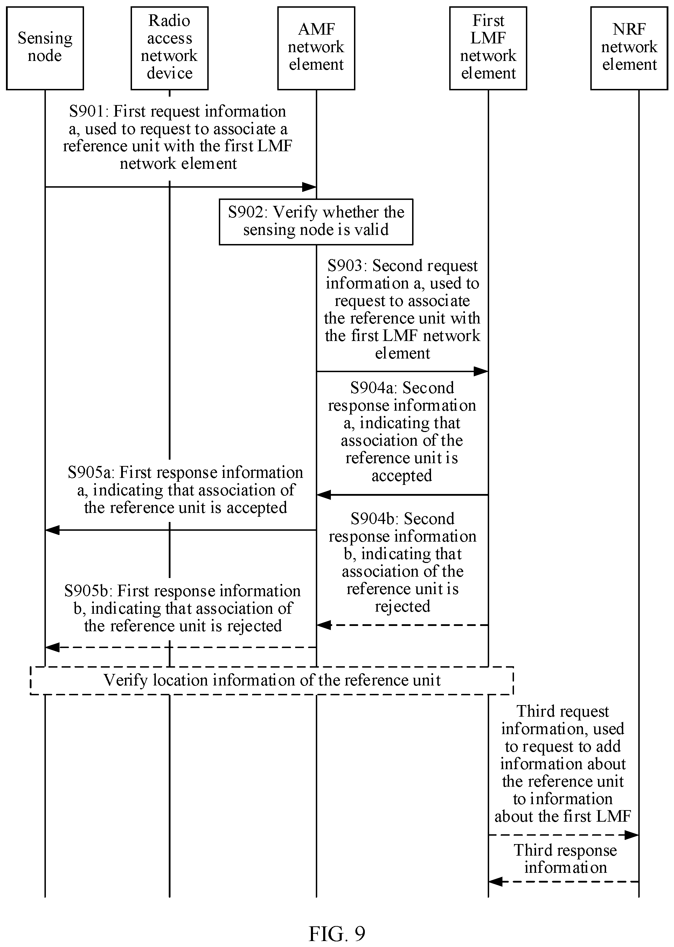

FIG. 9 shows a communication method according to this application. The communication method may be used to associate a reference unit with a location management network element or a sensing management function network element. The communication method may be performed during initial association of the reference unit or association update of the reference unit. For example, the location management network element is an LMF, a mobility management network element is an AMF, and a network repository network element is an NRF. Refer to FIG. 9. The communication method includes the following steps.

S901: A sensing node sends first request information a to an AMF network element. Correspondingly, the AMF network element receives the first request information a from the sensing node.

The first request information a is used to request to associate a reference unit with a first LMF network element, and location information of the reference unit is used to compensate for a positioning error. For example, the first request information a may be used for initial association of the reference unit, or used for association update of the reference unit.

Optionally, the location information of the reference unit is used to compensate the positioning error, or may be understood as that the location information of the reference unit is used to calibrate the positioning error, or the location information of the reference unit is used to eliminate the positioning error, and the three expressions are interchangeable.

For example, the reference unit is a passive object. The location information of the reference unit is obtained based on sensing. For details, refer to the related descriptions in the method shown in FIG. 7. The sensing node may be the first node or the second node described above. For details, refer to the related descriptions in the method shown in FIG. 7. Details are not described herein again.

For example, the first request information a may also be referred to as reference unit association request information (for example, an SRU association request), and the two expressions are interchangeable. This is not specifically limited in this application.

Optionally, the first request information a includes a first identifier (identifier, ID), and the first identifier is used to identify an association process of the reference unit. For example, the first identifier may be any preconfigured identifier, or the first identifier may be an identifier returned by an LMF/SMF network element in a previous association process of the reference unit.

For example, the first identifier may be a route identifier, or the first identifier may be referred to as a sensing reference unit link identifier (SRU ID) or a sensing link identifier (sensing link ID).

Optionally, the first request information a further includes at least one of the following: an identifier of the reference unit, a cause for associating the reference unit, sensing reliability of the reference unit, a sensing capability of the reference unit, the location information of the reference unit, or a status of the reference unit; and the cause for associating the reference unit includes initial association or association update, and the status of the reference unit includes an on ON state or an off OFF state. For example, in the on state, the location information of the reference unit is available, and in the off state, the location information of the reference unit is unavailable.

Optionally, the first request information a may be carried in a non-access stratum (non-access stratum, NAS)-level uplink (uplink, UL) NAS transfer message.

S902: The AMF network element verifies whether the sensing node is valid.

In a possible implementation, that the sensing node is valid may be understood as follows: The sensing node has permission for association of the reference unit. When the sensing node is valid, the following step S903 is performed.

For example, the AMF network element may store a correspondence between an identifier and a sensing node. After receiving the first request information a, the AMF network element may search for a sensing node corresponding to the first identifier, and verify whether a sender of the first request information a is the sensing node corresponding to the first identifier.

S903: The AMF network element sends second request information a to the first LMF network element. Correspondingly, the first LMF network element receives the second request information a from the AMF network element.

The second request information a is used to request to associate the reference unit with the first LMF network element. For example, content included in the second request information a is the same as that included in the first request information a. Therefore, it may also be considered that the AMF network element forwards the first request information a to the first LMF network element.

For example, the second request information a may also be referred to as reference unit association request information, and the two expressions are interchangeable. This is not specifically limited in this application.

In a possible implementation, if the first LMF network element accepts association of the reference unit, the following steps S904a and S905a are performed; or if the first LMF network element does not accept association of the reference unit, the following steps S904b and S905b are performed.

S904a: The first LMF network element sends second response information a to the AMF network element. Correspondingly, the AMF network element receives the second response information a from the first LMF network element.

The second response information a indicates that association of the reference unit is accepted. For example, in step S904a, the second response information a may also be referred to as reference unit association accept information (for example, SRU association accept).

Optionally, the second response information a includes a second identifier, and the second identifier may be used for association update of the reference unit of the first LMF network element. Further, the second identifier may be further used to identify the first LMF network element and/or the associated reference unit. The second identifier may be allocated by the first LMF network element.

Optionally, in step S904a, the second identifier may also be referred to as an association identifier (correlation ID). The second identifier may be the same as or different from the first identifier. This is not specifically limited in this application.

Optionally, when accepting association of the reference unit, the first LMF network element may store information carried in the second request information a, such as the first identifier and the location information of the reference unit.

S905a: The AMF network element sends first response information a to the sensing node. Correspondingly, the sensing node receives the first response information a from the AMF network element.

The first response information a indicates that association of the reference unit is accepted. It may be understood that the first response information a is determined based on the second response information a.

Optionally, the first response information a includes a second identifier. In other words, the first response information a includes a route identifier that is the same as the association identifier. That is, in step S905a, the second identifier may also be referred to as the route identifier. After receiving the second identifier, the sensing node may store the second identifier, and may subsequently perform association update on the reference unit of the first LMF network element by using the second identifier.

For example, the first response information a may also be referred to as reference unit association accept information, and the two expressions are interchangeable. This is not specifically limited in this application.

S904b: The first LMF network element sends second response information b to the AMF network element. Correspondingly, the AMF network element receives the second response information b from the first LMF network element.

The second response information b indicates that association of the reference unit is rejected. For example, a reason why the first LMF network element rejects association of the reference unit may be that the first LMF network element is not a serving LMF network element of the reference unit, or a quantity of reference units associated with the first LMF network element is greater than or equal to a threshold.

Optionally, the second response information b may include a route identifier of a second LMF network element. The second LMF network element may be a serving LMF network element of the reference unit, and the route identifier of the second LMF network element may be used to associate the reference unit with the second LMF network element.

For example, the second response information b may also be referred to as reference unit association reject information (for example, SRU association reject), and the two expressions are interchangeable. This is not specifically limited in this application.

S905b: The AMF network element sends first response information b to the sensing node. Correspondingly, the sensing node receives the first response information b from the AMF network element.

The first response information b indicates that association of the reference unit is rejected. For example, content carried in the first response information b and content carried in the second response information b may be the same. Therefore, it may be considered that the AMF network element forwards the second response information b to the sensing node.

For example, the first response information b may also be referred to as reference unit association reject information, and the two expressions are interchangeable. This is not specifically limited in this application.

In a possible implementation, the second response information a and the second response information b may be collectively referred to as second response information, and the second response information indicates whether association of the reference unit is accepted. The first response information a and the first response information b may be collectively referred to as first response information, and the first response information indicates whether association of the reference unit is accepted.

In a possible implementation, if the first LMF network element accepts association of the reference unit, the first LMF may verify the location information of the reference unit provided by the AMF network element in step S903, or may obtain or update the location information of the reference unit based on the method shown in FIG. 7.

In a possible implementation, if the first LMF network element accepts association of the reference unit, the first LMF network element may send third request information to an NRF network element, where the third request information is used to request to add information about the reference unit to information about the first LMF network element.

Optionally, if the first request information a is used for initial association of the reference unit, or used for association update of the reference unit, and the information about the reference unit changes, the first LMF network element sends the third request information to the NRF network element.

For example, in a scenario of initial association of the reference unit, the third request information may include a reference unit presence indication and the information about the reference unit. The information about the reference unit may be at least one of the identifier of the reference unit, the sensing reliability of the reference unit, the sensing capability of the reference unit, the location information of the reference unit, or the status of the reference unit. After receiving the third request information, the NRF network element adds the information about the reference unit to the information about the first LMF network element stored in the NRF network element.

In a scenario of association update of the reference unit, the third request information includes updated information about the reference unit. For example, when a location of the reference unit changes, the third request information includes changed location information. In this case, if the information about the first LMF network element stored in the NRF network element already includes the identifier of the reference unit, the NRF uses new information about the reference unit to overwrite old information about the reference unit.

Optionally, after receiving the third request information, the NRF network element may further send third response information to the first LMF network element. The third response information may be understood as an acknowledgment response to the third request information.

Optionally, the third request information may also be referred to as NRF reference unit update request information (for example, an NRF SRU update request). The third response information may be referred to as NRF reference unit update response information (for example, an NRF SRU update response).

In a possible implementation, before step S901, the sensing node may trigger a reference unit association service request. For example, the sensing node may send information to the AMF network element, to indicate that an association procedure of the reference unit is to be initiated.

In a possible implementation, the LMF network element in the foregoing method may also be replaced with the sensing management function network element (for example, the SMF network element), that is, a function of the LMF network element may also be implemented by the SMF network element.

In a possible implementation, the association procedure of the reference unit may also be properly changed to be applicable to association of a reference unit group. For example, the reference unit may be replaced with the reference unit group for understanding. For details, refer to the related descriptions in the method shown in FIG. 9. Details are not described herein again.

Based on the foregoing solution, the reference unit may be associated with the LMF network element. Because the location information of the reference unit may be used to compensate for the positioning error, when the LMF network element performs positioning subsequently, the location information of the reference unit may be used to compensate for the positioning error, to improve positioning accuracy.

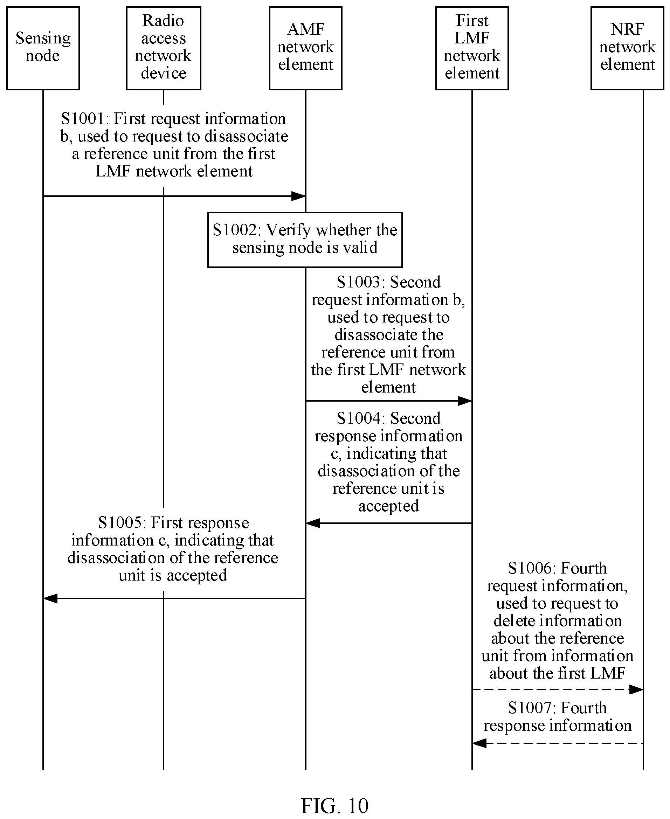

FIG. 10 shows another communication method according to this application. The communication method may be used to disassociate a reference unit from a location management network element or a sensing management function network element. The communication method may be used in a scenario in which a sensing node triggers disassociation of the reference unit. The method may be performed after the location management network element is associated with the reference unit and before the reference unit is unavailable (for example, because the reference unit moves or quality deteriorates) or when the reference unit is transferred to another location management network element. For example, the location management network element is an LMF, a mobility management network element is an AMF, and a network repository network element is an NRF. Refer to FIG. 10. The communication method includes the following steps.

S1001: A sensing node sends first request information b to an AMF network element. Correspondingly, the AMF network element receives the first request information b from the sensing node.

The first request information b is used to request to disassociate a reference unit from a first LMF network element, and location information of the reference unit is used to compensate for a positioning error.

For example, the reference unit is a passive object. The location information of the reference unit is obtained based on sensing, and the sensing node may be the first node or the second node described above. For details, refer to the related descriptions in the method shown in FIG. 7. Details are not described herein again.

For example, the first request information b may also be referred to as reference unit disassociation request information or reference unit association release request information (for example, an SRU disassociation request), and the three expressions are interchangeable. This is not specifically limited in this application.

Optionally, the first request information b includes a second identifier. Further, the first request information b further includes an identifier of the reference unit. The second identifier is an identifier that is returned in an association process of the reference unit and that is used for association update of the reference unit of the first location management network element, for example, the second identifier returned by the AMF network element in step S905a. For the sensing node, the second identifier may also be referred to as a route identifier.

S1002: The AMF network element verifies whether the sensing node is valid.

In a possible implementation, that the sensing node is valid may be understood as follows: The sensing node has permission for disassociation of the reference unit. For a manner of verifying whether the sensing node is valid, refer to the related descriptions in step S902. Details are not described herein again. When the sensing node is valid, the following step S1003 is performed.

S1003: The AMF network element sends second request information b to the first LMF network element. Correspondingly, the first LMF network element receives the second request information b from the AMF network element.

The second request information b is used to request to disassociate the reference unit from the first LMF network element. For example, content included in the second request information b is the same as that included in the first request information b. Therefore, it may also be considered that the AMF network element forwards the first request information b to the first LMF network element.

For example, the second request information b may also be referred to as reference unit disassociation request information or reference unit association release request information, and the three expressions are interchangeable. This is not specifically limited in this application.

S1004: The first LMF network element sends second response information c to the AMF network element. Correspondingly, the AMF network element receives the second response information c from the first LMF network element.

The second response information c indicates that disassociation of the reference unit is accepted. For example, in step S1004, the second response information c may also be referred to as reference unit disassociation accept information (for example, SRU disassociation accept).

Optionally, the second response information c includes a third identifier, and the third identifier is an association identifier returned in the association process of the reference unit. For example, the third identifier is the second identifier returned by the first LMF network element in step S904a.

S1005: The AMF network element sends first response information c to the sensing node. Correspondingly, the sensing node receives the first response information c from the AMF network element.

The first response information c indicates that disassociation of the reference unit is accepted. For example, in step S1004, the second response information c may also be referred to as reference unit disassociation accept information. It may be understood that the first response information c is determined based on the second response information c.

Optionally, the first response information c includes a fourth identifier, and the fourth identifier is a route identifier that is the same as the third identifier. In other words, the first response information c includes a route identifier that is the same as the association identifier (that is, the third identifier). In other words, the first response information c includes the third identifier. When the third identifier is the second identifier returned by the first LMF network element in step S904a, the second identifier, the third identifier, and the fourth identifier are the same.

Optionally, before step S1004 or after step S1005, the first LMF network element may verify whether the reference unit is currently associated with the first LMF network element (that is, whether the current reference unit is associated with the first LMF network element). If the reference unit is currently associated with the first LMF network element, the following steps S1006 and S1007 are performed. If the reference unit is not currently associated with the first LMF network element, the following steps S1006 and S1007 are not performed.

S1006. The first LMF network element sends fourth request information to an NRF network element. Correspondingly, the NRF network element receives the fourth request information from the first LMF network element.

The fourth request information is used to request to delete information about the reference unit from information about the first LMF network element. For example, the fourth request information may include the identifier of the reference unit and/or the second identifier.

S1007: The NRF network element sends fourth response information to the first LMF network element. Correspondingly, the first LMF network element receives the fourth response information from the NRF network element.

Optionally, after receiving the fourth request information, the NRF network element may delete the information about the reference unit from the information about the first LMF network element stored in the NRF network element. The fourth response information may be understood as an acknowledgment response to the fourth request information.

Optionally, the fourth request information may also be referred to as NRF reference unit update request information (for example, an NRF SRU update request). The fourth response information may be referred to as NRF reference unit update response information (for example, an NRF SRU update response).

In a possible implementation, the first LMF network element may not accept disassociation of the reference unit. In this case, steps S1004 to S1007 may not be performed. The first LMF network element may send second response information d to the AMF network element, and the AMF network element may send first response information d to the sensing node. The second response information d and the first response information d indicate that disassociation of the reference unit is not accepted.

In a possible implementation, the first request information a in the method shown in FIG. 9 and the first request information b in the method shown in FIG. 10 may be collectively referred to as first request information, and the first request information is used to request to associate or disassociate the reference unit with or from the first location management network element. The second request information a in the method shown in FIG. 9 and the second request information b in the method shown in FIG. 10 may be collectively referred to as second request information, and the second request information is used to request to associate or disassociate the reference unit with or from the first location management network element.

In a possible implementation, before step S1001, the sensing node may trigger a reference unit disassociation service request. For example, the sensing node may send information to the AMF network element, to indicate that a disassociation procedure of the reference unit is to be initiated.

In a possible implementation, the LMF network element in the foregoing method may also be replaced with the sensing management function network element (for example, the SMF network element), that is, a function of the LMF network element may also be implemented by the SMF network element.

In a possible implementation, the disassociation procedure of the reference unit may also be properly changed to be applicable to disassociation of a reference unit group. For example, the reference unit may be replaced with the reference unit group for understanding. For details, refer to the related descriptions in the method shown in FIG. 10. Details are not described herein again.

Based on the foregoing solution, the reference unit associated with the LMF network element may be released, to avoid a case in which the LMF network element still uses the location information of the reference unit to compensate for the positioning error when the reference unit is unavailable or the like, causing a decrease in positioning performance.

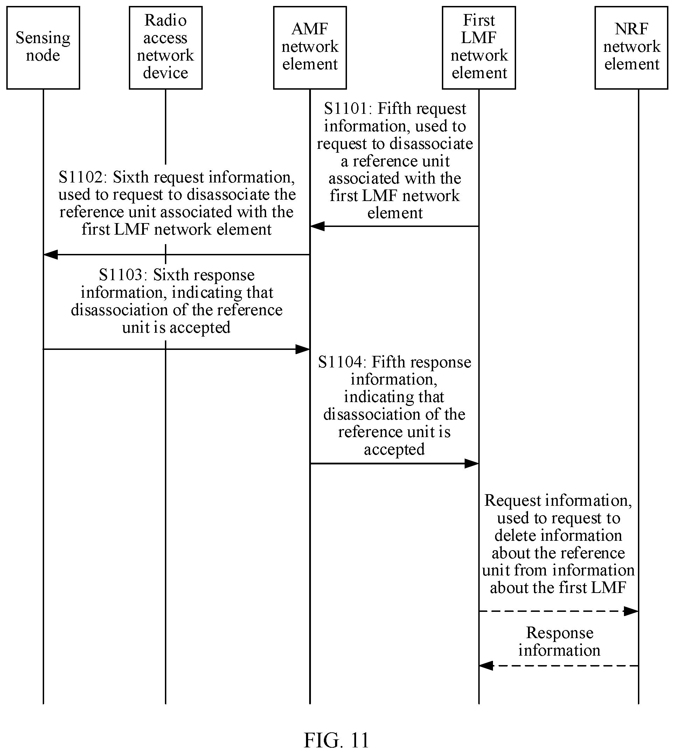

FIG. 11 shows another communication method according to this application. The communication method may be used to disassociate a reference unit from a location management network element or a sensing management function network element. The communication method may be used in a scenario in which a location management network element or a sensing management function network element triggers disassociation of a reference unit.

The method may be performed after the location management network element or the sensing management function network element is associated with the reference unit and before the location management network element or the sensing management function network element is unavailable (for example, maintained, removed, or replaced), or may be triggered for another cause after the location management network element or the sensing management function network element is associated with the reference unit. For example, the location management network element is an LMF, a mobility management network element is an AMF, and a network repository network element is an NRF. Refer to FIG. 11. The communication method includes the following steps.

S1101: A first LMF network element sends fifth request information to an AMF network element. Correspondingly, the AMF network element receives the fifth request information from the first LMF network element.

The fifth request information is used to request to disassociate a reference unit associated with the first LMF network element, and location information of the reference unit is used to compensate for a positioning error.

For example, the reference unit is a passive object. The location information of the reference unit is obtained based on sensing. For details, refer to the related descriptions in the method shown in FIG. 7. Details are not described herein again.

For example, the fifth request information may also be referred to as reference unit disassociation request information (for example, an SRU disassociation request), and the two expressions are interchangeable. This is not specifically limited in this application.

Optionally, the fifth request information includes a second identifier and/or a route identifier of a second LMF network element. The second identifier is an identifier that is returned in an association process of the reference unit and that is used for association update of the reference unit of the first LMF network element, for example, the second identifier returned by the first LMF network element in step S904a. The route identifier of the second LMF network element may be used to associate the reference unit with the second LMF network element.

S1102: The AMF network element sends sixth request information to a sensing node. Correspondingly, the sensing node receives the sixth request information from the AMF network element.

The sixth request information is used to request to disassociate the reference unit associated with the first LMF network element. It may be understood that the sixth request information is determined based on the fifth request information.

Optionally, the sixth request information includes a route identifier that is the same as the second identifier and/or the route identifier of the second LMF network element. For details, refer to the related descriptions in step S1101. Details are not described herein again.

S1103: The sensing node sends sixth response information to the AMF network element. Correspondingly, the AMF network element receives the sixth response information from the sensing node.

The sixth response information indicates that disassociation of the reference unit is accepted. For example, the sixth response information may also be referred to as reference unit disassociation accept information (for example, SRU disassociation accept).

Optionally, the sixth response information includes the second identifier (also referred to as the route identifier) received in S1002.

S1104: The AMF network element sends fifth response information to the first LMF network element. Correspondingly, the first LMF network element receives the fifth response information from the AMF network element.

The fifth response information indicates that disassociation of the reference unit is accepted. For example, the fifth response information includes an association identifier that is the same as the route identifier (that is, the second identifier) received in S1003.

Optionally, after step S1104, the first LMF network element may further send information to the NRF network element, to request to delete information about the reference unit from information about the first LMF network element. For details, refer to the related descriptions in steps S1006 and S1007. Details are not described herein again.

In a possible implementation, before step S1102, if the sensing node is in a state in which a service can be provided, the AMF network element may execute a network-triggered service request, to set the sensing node to a connected state.

In a possible implementation, if the fifth request information and the sixth request information include the identifier of the second LMF network element, the sensing node may associate the reference unit with the second LMF network element. For the association process, refer to the procedure shown in FIG. 9. Details are not described herein again.

In a possible implementation, the LMF network element in the foregoing method may also be replaced with the sensing management function network element (for example, the SMF network element), that is, a function of the LMF network element may also be implemented by the SMF network element.

In a possible implementation, the disassociation procedure of the reference unit may also be properly changed to be applicable to disassociation of a reference unit group. For example, the reference unit may be replaced with the reference unit group for understanding. For details, refer to the related descriptions in the method shown in FIG. 11. Details are not described herein again.

Based on this solution, when the LMF network element is to be unavailable, the reference unit previously associated with the LMF network element may be disassociated, so that the sensing node can associate the reference unit with another LMF network element, to assist the another LMF network element in performing positioning, thereby improving positioning accuracy.

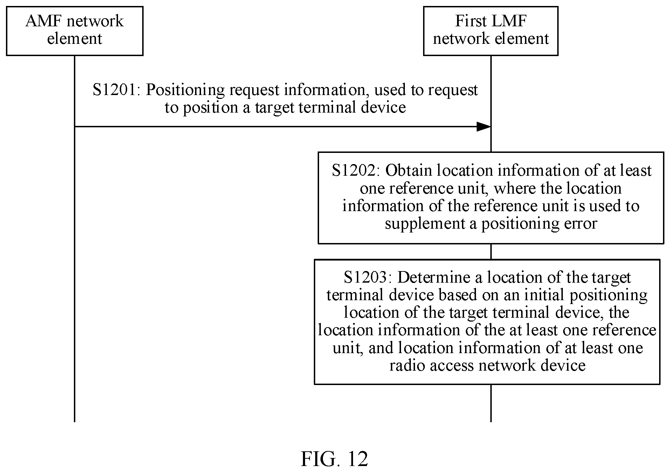

The foregoing describes the association and disassociation procedures of the reference unit. The following describes a method for performing positioning/sensing by the location management network element or the sensing management function network element by using the reference unit. For example, the location management network element is an LMF, a mobility management network element is an AMF, and a network repository network element is an NRF. As shown in FIG. 12, the method includes the following steps.

S1201: An AMF network element sends positioning request information to a first LMF network element. Correspondingly, the first LMF network element receives the positioning request information from the AMF network element.

The positioning request information is used to request to position a target terminal device. For example, the AMF network element is a serving AMF network element of the target terminal device, and the first LMF network element is a serving LMF network element of the target terminal device.

S1202: The first LMF network element obtains location information of at least one reference unit. The location information of the reference unit is used to compensate for a positioning error.

For example, the reference unit is a passive object. The location information of the reference unit is obtained based on sensing. For details, refer to the related descriptions in the method shown in FIG. 7. Details are not described herein again.

Optionally, the at least one reference unit includes a first reference unit associated with the first LMF network element. For example, the first reference unit is located in a serving cell of the target terminal device, and/or the first reference unit is a reference unit closest to an initial positioning location of the target terminal device in at least one reference unit associated with the first LMF network element.

Optionally, the at least one reference unit further includes a second reference unit associated with a second LMF network element. For example, the second reference unit is located in the serving cell of the target terminal device, and/or the second reference unit is a reference unit closest to the initial positioning location of the target terminal device in at least one reference unit associated with the second LMF network element.

S1203. The first LMF network element determines a location of the target terminal device based on the initial positioning location of the target terminal device, the location information of the at least one reference unit, and location information of at least one radio access network device.

The at least one radio access network device is configured to determine the initial positioning location of the target terminal device. That is, the initial positioning location of the target terminal device is determined based on a positioning measurement quantity from the target terminal device and/or the at least one radio access network device. For example, the positioning measurement quantity may include an uplink time difference of arrival (uplink-time difference of arrival, UL-TDOA), a downlink-time difference of arrival (downlink-time difference of arrival, DL-TDOA), an AOA, multi-round trip time (multi-round trip time, Multi-RTT), and the like.

Based on this solution, the first LMF network element may obtain the location information of the at least one reference unit. Because the location information of the reference unit is used to compensate the positioning error, the first LMF network element may calibrate the initial positioning location of the target terminal device by using the location information of the at least one reference unit in combination with the location information of the at least one radio access network device, to improve positioning accuracy.

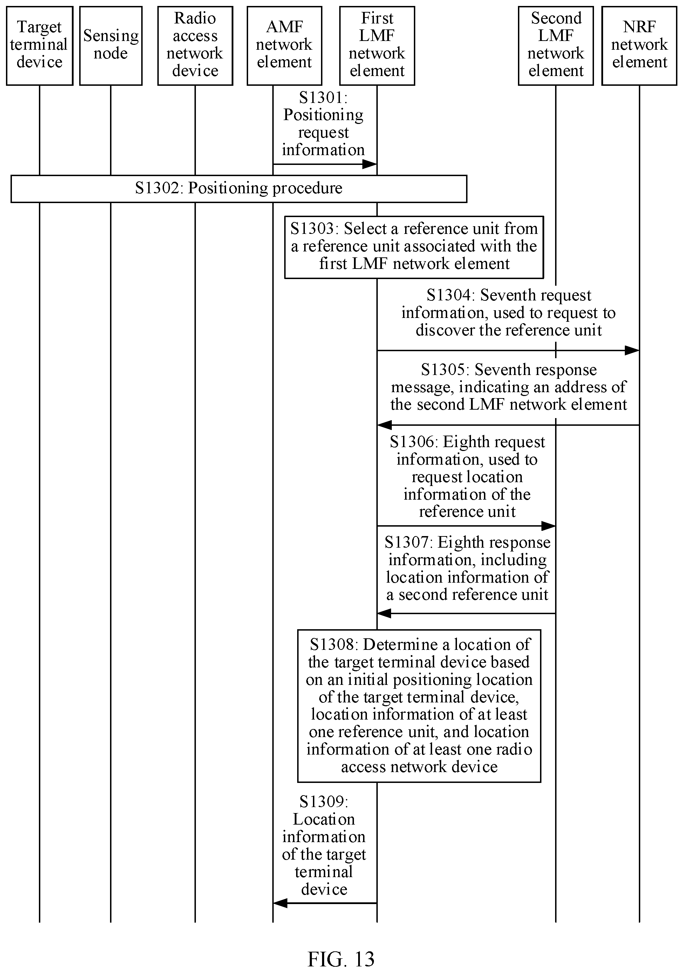

The foregoing describes an overall procedure of reference unit-assisted positioning. The following describes an application of the procedure in detail. FIG. 13 shows a communication method according to an embodiment of this application. The method may be understood as a specific application of the method shown in FIG. 12. For example, a location management network element is an LMF, a mobility management network element is an AMF, and a network repository network element is an NRF. Refer to FIG. 13. The method includes the following steps.

S1301: An AMF network element sends positioning request information to a first LMF network element. Correspondingly, the first LMF network element receives the positioning request information from the AMF network element. For details, refer to the descriptions in step S1201. Details are not described herein again.

S1302: A positioning procedure.

For example, in step S1302, the first LMF network element may receive a positioning measurement quantity from a target terminal device and/or at least one radio access network device, and determine an initial positioning location of the target terminal device based on the positioning measurement quantity. For the positioning measurement quantity, refer to the related descriptions in step S1203. For a specific implementation of step S1302, refer to the descriptions of the positioning procedure in an existing protocol. Details are not described herein again.

S1303: The first LMF network element selects a reference unit from a reference unit associated with the first LMF network element.

Optionally, the first LMF network element may select, based on information such as related information (such as a serving cell and an initial positioning location) of the target terminal device and a status of the reference unit, the reference unit from the reference unit associated with the first LMF network element.

Optionally, after step S1303 is performed, the first LMF network element may select at least one reference unit, or may not select any reference unit.

For example, the at least one reference unit selected by the first LMF network element may include a first reference unit. The first reference unit may be located in a serving cell of the target terminal device, and/or the first reference unit may be a reference unit closest to the initial positioning location of the target terminal device in the at least one reference unit associated with the first LMF network element. For details, refer to the related descriptions in step S1202.

For example, a reason why the first LMF network element does not select any reference unit may be that there is no reference unit that meets a selection condition in the reference unit associated with the first LMF network element. The selection condition may be, for example, that the reference unit is located in the serving cell of the target terminal device, and a distance between the reference unit and the initial positioning location of the target terminal device is less than or equal to a threshold.

In a possible implementation, because in step S1303, the first LMF network element selects the reference unit associated with the first LMF network element, the first LMF network element may store location information of the reference unit in an association process of the reference unit. Therefore, after the reference unit is determined, the first LMF network element may obtain the location information of the reference unit.

It should be noted that step S1303 is an optional step. For example, when the first LMF network element is not associated with any reference unit, step S1303 may not be performed. Alternatively, the first LMF network element.

In a possible implementation, if step S1303 is not performed, or the first LMF network element does not select any reference unit in step S1303, or a quantity of reference units selected in step S1303 is less than or equal to a threshold, the following steps S1304 to S1307 may be further performed.

S1304: The first LMF network element sends seventh request information to an NRF network element. Correspondingly, the NRF network element receives the seventh request information from the first LMF network element.

The seventh request information is used to request to discover the reference unit. For example, the seventh request information may also be referred to as a reference unit discovery request (for example, an SRU discovery request).

Optionally, the seventh request information may include a reference unit indication and/or information about an area. The reference unit indication may indicate a request for discovering the reference unit. The area may be a tracking area (tracking area, TA) determined by the first LMF based on the serving cell of the target terminal device.

S1305: The NRF network element sends seventh response information to the first LMF network element. Correspondingly, the first LMF network element receives the seventh response information from the NRF network element.

The seventh response information includes an address of at least one second LMF network element, and the second LMF network element is associated with a reference unit. For example, the seventh response information may include a configuration file of the at least one second LMF network element, and the configuration file includes the address of the second LMF network element. The seventh response information may also be referred to as a reference unit discovery response (for example, an SRU discovery response).

Optionally, after receiving the seventh request information, the NRF network element may select, as the second LMF network element, an LMF network element that is located in the TA and that is associated with a reference unit.

S1306: The first LMF network element sends eighth request information to the second LMF network element. Correspondingly, the second LMF network element receives the eighth request information from the first LMF network element.

The eighth request information is used to request the location information of the reference unit. For example, the eighth request information may include an identifier of the serving cell of the target terminal device and/or the initial positioning location of the target terminal device.

For example, the eighth request information may also be referred to as a reference unit location request (for example, an SRU localization request) or a reference unit location measurement data request (for example, an SRU localization measurement data request).

S1307: The second LMF network element sends eighth response information to the first LMF network element. Correspondingly, the first LMF network element receives the eighth response information from the second LMF network element.

The eighth response information includes location information of a second reference unit. The second reference unit is a reference unit associated with the second LMF network element.

For example, the second reference unit may be determined by the second LMF network element based on the identifier of the serving cell of the target terminal device and/or the initial positioning location of the target terminal device. For example, the second reference unit is located in the serving cell of the target terminal device, and/or the second reference unit is a reference unit closest to the initial positioning location of the target terminal device in at least one reference unit associated with the second LMF network element.

It may be understood that, steps S1301 to S1307 may be understood as a specific implementation in which the first LMF network element obtains the location information of the at least one reference unit.

S1308. The first LMF network element determines a location of the target terminal device based on the initial positioning location of the target terminal device, the location information of the at least one reference unit, and location information of at least one radio access network device.

For the initial positioning location of the target terminal device and the at least one radio access network device, refer to the related descriptions in step S1203 and step S1302. Details are not described herein again.

Optionally, the first LMF network element may determine a location calibration value of the radio access network device relative to the reference unit based on the location information of the reference unit and the location information of the radio access network device, and then determine the location of the target terminal device based on the location calibration value and the initial positioning location of the target terminal device.

In the foregoing solution, an example in which the first LMF network element obtains the location information of the reference unit is used for description. In addition, the first LMF network element may also obtain a location calibration value of the at least one radio access network device relative to the reference unit. In this scenario, in step S1307, the eighth response information may carry the location calibration value of the radio access network device relative to the second reference unit. Before step S1307, the second LMF network element may obtain the location calibration value. Similarly, after step S1301, the first LMF network element may obtain a location calibration value of the at least one radio access network device relative to the first reference unit.

S1309: The first LMF network element sends location information of the target terminal device to the AMF network element. Correspondingly, the AMF network element receives the location information of the target terminal device from the first LMF network element.

In a possible implementation, the LMF network element in the foregoing method may also be replaced with a sensing management function network element (for example, an SMF network element), that is, a function of the LMF network element may also be implemented by the SMF network element.

In a possible implementation, the foregoing reference unit-assisted positioning procedure may also be properly changed to be applicable to a reference unit group-assisted positioning procedure. For example, the reference unit may be replaced with a reference unit group for understanding. For details, refer to the related descriptions in the method shown in FIG. 12 or FIG. 13. Details are not described herein again.

It should be noted that FIG. 9 to FIG. 13 are described only by using an example in which the location management network element is an LMF, the mobility management network element is an AMF, and the network repository network element is an NRF. In actual application, in the foregoing method, a function of the LMF network element may be implemented by the location management network element in any form or name, a function of the AMF network element may be implemented by the mobility management network element in any form or name, and a function of the NRF network element may be implemented by the network repository network element in any form or name.

It may be understood that, in the foregoing embodiments, the method and/or the step implemented by each node may alternatively be implemented by a component (for example, a processor, a chip, a chip system, a circuit, a logical module, or software) that may be used in the node; and the method and/or the step implemented by each network element may alternatively be implemented by a component (for example, a processor, a chip, a chip system, a circuit, a logical module, or software) that may be used in the network element. The chip system may include a chip, or the chip system may include a chip and another discrete component.

It may be understood that, to implement the foregoing functions, the communication apparatus includes a hardware structure and/or a software module for performing a corresponding function. A person skilled in the art should be easily aware that units, algorithms, and steps in the examples described with reference to embodiments disclosed in this specification can be implemented in a form of hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division during actual implementation.

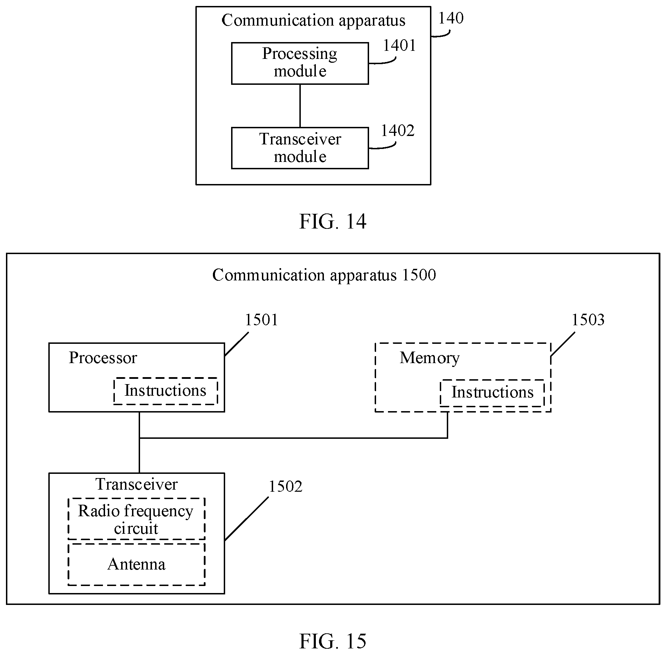

FIG. 14 is a diagram of a structure of a communication apparatus 140. The communication apparatus 140 includes a processing module 1401 and a transceiver module 1402. The communication apparatus 140 may be configured to implement a function of the first node, the second node, the sensing node, the mobility management network element, and the location management network element/sensing management function network element described above.

In some embodiments, the communication apparatus 140 may further include a storage module (not shown in FIG. 14), configured to store program instructions and data.

In some embodiments, the transceiver module 1402 may also be referred to as a transceiver unit, and is configured to implement a sending function and/or a receiving function. The transceiver module 1402 may include a transceiver circuit, a transceiver machine, a transceiver, or a communication interface.

In some embodiments, the transceiver module 1402 may include a receiving module and a sending module, which are respectively configured to perform receiving and sending steps performed by the first node, the second node, the sensing node, the mobility management network element, and the location management network element/sensing management function network element in the foregoing method embodiments, and/or another process used to support the technology described in this specification. The processing module 1401 may be configured to perform a processing (for example, determining) step performed by the first node, the second node, the sensing node, the mobility management network element, and the location management network element/sensing management function network element in the foregoing method embodiments, and/or another process used to support the technology described in this specification.

When the communication apparatus 140 is configured to implement a function of the second node,
the transceiver module 1402 is configured to receive first information respectively corresponding to at least one first node, where the first information includes information about the first node and sensing information corresponding to a sensing link, the sensing information includes information about N scatterers and/or information about M scatterer groups, N and M are positive integers, and the first node is a receiving node of a sensing signal on the sensing link; the processing module 1401 is configured to determine a reference unit based on the first information respectively corresponding to the at least one first node; and the transceiver module 1402 is further configured to send second information to each of the at least one first node, where the second information indicates location calibration values/a location calibration value of the scatterer and/or the scatterer group relative to the reference unit.

When the communication apparatus 140 is configured to implement a function of the first node,
the transceiver module 1402 is configured to send first information to a second node; and the transceiver module 1402 is further configured to receive second information from the second node, where the first information includes information about the first node and sensing information corresponding to a sensing link, the sensing information includes information about N scatterers and/or information about M scatterer groups, N and M are positive integers, the first node is a receiving node of a sensing signal on the sensing link, and the first information is used to determine a reference unit; and the second information indicates location calibration values/a location calibration value of the scatterer and/or the scatterer group relative to the reference unit.

When the communication apparatus 140 is configured to implement a function of the sensing node,
the transceiver module 1402 is configured to send first request information to a mobility management network element, where the first request information is used to request to associate or disassociate a reference unit with or from a first location management network element, and location information of the reference unit is used to compensate for a positioning error; and the transceiver module 1402 is further configured to receive first response information from the mobility management network element, where the first response information indicates whether association or disassociation of the reference unit is accepted.

When the communication apparatus 140 is configured to implement a function of the mobility management network element,
the transceiver module 1402 is configured to receive first request information from a sensing node, where the first request information is used to request to associate or disassociate a reference unit with or from a first location management network element, and location information of the reference unit is used to compensate for a positioning error; the processing module 1401 is configured to determine that the sensing node is valid; and when the sensing node is valid, the transceiver module 1402 is further configured to send second request information to the first location management network element, where the second request information is used to request to associate or disassociate the reference unit with or from the first location management network element.

Optionally, the transceiver module 1402 is further configured to receive second response information from the first location management network element, where the second response information indicates whether association or disassociation of the reference unit is accepted; and the transceiver module 1402 is further configured to send first response information to the sensing node, where the first response information indicates whether association or disassociation of the reference unit is accepted.

When the communication apparatus 140 is configured to implement a function of the location management network element,
the transceiver module 1402 is configured to receive second request information from a mobility management network element, where the second request information is used to request to associate or disassociate a reference unit with or from a first location management network element, and location information of the reference unit is used to compensate for a positioning error; and the transceiver module 1402 is further configured to send second response information to the mobility management network element, where the second response information indicates whether association or disassociation of the reference unit is accepted.

Optionally, when the second request information is used to request to associate the reference unit with the first location management network element, the transceiver module 1402 is further configured to send third request information to a network repository network element, where the third request information is used to request to add information about the reference unit to information about the first location management network element.

When the communication apparatus 140 is configured to implement a function of the location management network element,
the transceiver module 1402 is configured to send fifth request information to a mobility management network element, where the fifth request information is used to request to disassociate a reference unit associated with a first location management network element, and location information of the reference unit is used to compensate for a positioning error; and the transceiver module 1402 is further configured to receive fifth response information from the mobility management network element, where the fifth response information indicates that disassociation of the reference unit is accepted.

When the communication apparatus 140 is configured to implement a function of the location management network element,
the transceiver module 1402 is configured to receive positioning request information used to request to position a target terminal device; the processing module 1401 is configured to obtain location information of at least one reference unit, where the location information of the reference unit is used to compensate for a positioning error; and the processing module 1401 is further configured to determine a location of the target terminal device based on an initial positioning location of the target terminal device, the location information of the at least one reference unit, and location information of at least one radio access network device, where the at least one radio access network device is configured to determine the initial positioning location.

Optionally, the transceiver module 1402 is further configured to send, to the second location management network element, eighth request information used to request the location information of the reference unit; and the transceiver module 1402 is further configured to receive, from the second location management network element, eighth response information including location information of the second reference unit.

Optionally, the transceiver module 1402 is further configured to send, to a network repository network element, seventh request information used to request to discover the reference unit; and the transceiver module 1402 is further configured to receive, from the network repository network element, seventh response information indicating an address of the second location management network element.

All related content of the steps in the foregoing method embodiments may be cited in function descriptions of the corresponding functional modules. Details are not described herein again.

In this application, the communication apparatus 140 may be presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that may provide the foregoing functions.

In some embodiments, when the communication apparatus 140 in FIG. 14 is a chip or a chip system, a function/implementation process of the transceiver module 1402 may be implemented by an input/output interface (or a communication interface) of the chip or the chip system, and a function/implementation process of the processing module 1401 may be implemented by a processor (or a processing circuit) of the chip or the chip system.

Because the communication apparatus 140 provided in this embodiment may perform the foregoing methods, for technical effects that can be achieved by the communication apparatus 140, refer to the foregoing method embodiments. Details are not described herein again.

In a possible product form, the first node, the second node, the sensing node, the mobility management network element, and the location management network element/sensing management function network element in embodiments of this application may alternatively be implemented by using the following: one or more field programmable gate arrays (field programmable gate array, FPGA), a programmable logic device (programmable logic device, PLD), a controller, a state machine, gate logic, a discrete hardware component, any other suitable circuit, or any combination of circuits that can perform various functions described throughout this application.

In another possible product form, the first node, the second node, the sensing node, the mobility management network element, and the location management network element/sensing management function network element in embodiments of this application may be implemented by using a general bus architecture. For ease of description, FIG. 15 is a diagram of a structure of a communication apparatus 1500 according to an embodiment of this application. The communication apparatus 1500 includes a processor 1501 and a transceiver 1502. The communication apparatus 1500 may be a first node, a second node, a sensing node, a mobility management network element, a location management network element/sensing management function network element, or a chip or a chip system in the first node, the second node, the sensing node, the mobility management network element, or the location management network element/sensing management function network element. FIG. 15 shows only main components of the communication apparatus 1500. In addition to the processor 1501 and the transceiver 1502, the communication apparatus may further include a memory 1503 and an input/output apparatus (not shown in the figure).

Optionally, the processor 1501 is mainly configured to process a communication protocol and communication data, control the entire communication apparatus, execute a software program, and process data of the software program, to implement the methods provided in the foregoing method embodiments. The memory 1503 is mainly configured to store the software program and data. The transceiver 1502 may include a radio frequency circuit and an antenna. The radio frequency circuit is mainly configured to perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

Optionally, the processor 1501, the transceiver 1502, and the memory 1503 may be connected through a communication bus.

After the communication apparatus is powered on, the processor 1501 may read the software program in the memory 1503, interpret and execute instructions of the software program, and process the data of the software program. When data needs to be sent in a wireless manner, the processor 1501 performs baseband processing on the to-be-sent data, and outputs a baseband signal to the radio frequency circuit. The radio frequency circuit performs radio frequency processing on the baseband signal, and then sends a radio frequency signal to the outside through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1501. The processor 1501 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, in hardware implementation, a person skilled in the art may figure out that the communication apparatus 140 may be in a form of the communication apparatus 1500 shown in FIG. 15.

In an example, a function/implementation process of the processing module 1401 in FIG. 14 may be implemented by the processor 1501 in the communication apparatus 1500 shown in FIG. 15 by invoking computer-executable instructions stored in the memory 1503. A function/implementation process of the transceiver module 1402 in FIG. 14 may be implemented by the transceiver 1502 in the communication apparatus 1500 shown in FIG. 15.

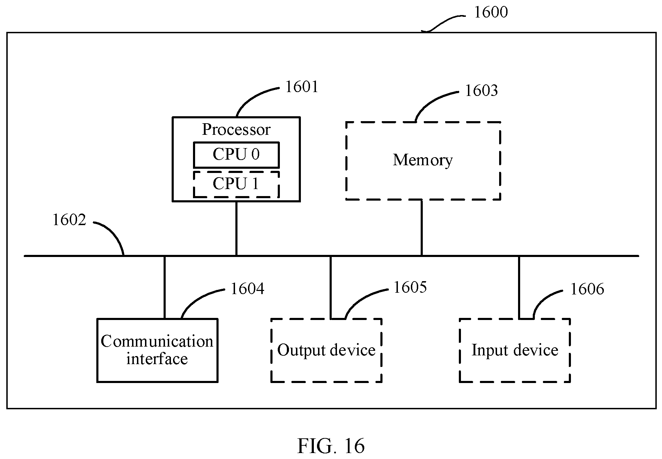

In still another possible product form, the first node, the second node, the sensing node, the mobility management network element, and the location management network element/sensing management function network element in this application may have a composition structure shown in FIG. 16, or include components shown in FIG. 16. FIG. 16 is a composition diagram of a communication apparatus 1600 according to this application. The communication apparatus 1600 may be a chip or a system on chip in a first node, a second node, a sensing node, a mobility management network element, or a location management network element/sensing management function network element.

As shown in FIG. 16, the communication apparatus 1600 includes at least one processor 1601 and at least one communication interface (FIG. 16 is merely illustrative, showing an example that one communication interface 1604 and one processor 1601 are included). Optionally, the communication apparatus 1600 may further include a communication bus 1602 and a memory 1603.

The processor 1601 may be a general-purpose central processing unit (central processing unit, CPU), a general-purpose processor, a network processor (network processor, NP), a digital signal processor (digital signal processor, DSP), a microprocessor, a microcontroller, a PLD, or any combination thereof. Alternatively, the processor 1601 may be another apparatus having a processing function, for example, a circuit, a component, or a software module. This is not limited.

The communication bus 1602 is configured to connect different components in the communication apparatus 1600, so that the different components can communicate with each other. The communication bus 1602 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used for representation in FIG. 16, but this does not mean that there is only one bus or only one type of bus.

The communication interface 1604 is configured to communicate with another device or a communication network. For example, the communication interface 1604 may be a module, a circuit, a transceiver, or any apparatus that can implement communication. Optionally, the communication interface 1604 may alternatively be an input/output interface located in the processor 1601, and is configured to implement signal input and signal output of the processor.

The memory 1603 may be an apparatus having a storage function, and is configured to store instructions and/or data. The instructions may be a computer program.

For example, the memory 1603 may be a read-only memory (read-only memory, ROM) or another type of static storage device that can store static information and/or instructions, or may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compact disc, a laser disc, an optical disc, a digital versatile disc, a Blu-ray disc, or the like), a disk storage medium, or another magnetic storage device. This is not limited.

It should be noted that the memory 1603 may exist independently of the processor 1601, or may be integrated with the processor 1601. The memory 1603 may be located inside the communication apparatus 1600, or may be located outside the communication apparatus 1600. This is not limited. The processor 1601 may be configured to execute the instructions stored in the memory 1603, to implement the method provided in the following embodiments of this application.

In an optional implementation, the communication apparatus 1600 may further include an output device 1605 and an input device 1606. The output device 1605 communicates with the processor 1601, and may display information in a plurality of manners. For example, the output device 1605 may be a liquid crystal display (liquid crystal display, LCD), a light emitting diode (light emitting diode, LED) display device, a cathode ray tube (cathode ray tube, CRT) display device, or a projector (projector). The input device 1606 communicates with the processor 1601, and may receive an input from a user in a plurality of manners. For example, the input device 1606 may be a mouse, a keyboard, a touchscreen device, or a sensing device.

In some embodiments, in hardware implementation, a person skilled in the art may figure out that the communication apparatus 140 shown in FIG. 14 may be in a form of the communication apparatus 1600 shown in FIG. 16.

In an example, a function/implementation process of the processing module 1401 in FIG. 14 may be implemented by the processor 1601 in the communication apparatus 1600 shown in FIG. 16 by invoking computer-executable instructions stored in the memory 1603. A function/implementation process of the transceiver module 1402 in FIG. 14 may be implemented by the communication interface 1604 in the communication apparatus 1600 shown in FIG. 16.

It should be noted that the structure shown in FIG. 16 does not constitute a specific limitation on the first node, the second node, the sensing node, the mobility management network element, and the location management network element/sensing management function network element. For example, in some other embodiments of this application, the first node, the second node, the sensing node, the mobility management network element, and the location management network element/sensing management function network element may include more or fewer components than those shown in the figure, or may combine some components, or may split some components, or may have different component arrangements. The components shown in the figure may be implemented by hardware, software, or a combination of software and hardware.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke instructions in the computer program stored in the memory, to instruct the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and transmit the computer-executable instructions to the processor.

In still another possible implementation, the communication apparatus further includes a communication interface, and the communication interface is configured to communicate with a module outside the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or the instructions are executed by a computer, functions in any one of the foregoing method embodiments are implemented.

This application further provides a computer program product. When the computer program product is executed by a computer, functions in any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiment. Details are not described herein again.

It may be understood that the system, apparatuses, and methods described in this application may alternatively be implemented in another manner. For example, the described apparatus embodiments are merely examples. For example, division into the units is merely logical function division, and may be other division during actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, this is, may be located in one position, or may be distributed on a plurality of network units. Parts displayed as units may or may not be physical units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When a software program is used to implement embodiments, all or some of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable media accessible to a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprised) does not exclude another component or another step, and "a" or "one" does not exclude a case of a plurality of. A single processor or another unit may implement several functions enumerated in the claims. Some measures are set forth in dependent claims that are different from each other, but this does not mean that these measures cannot be combined to produce a great effect.

Although this application is described with reference to specific features and embodiments thereof, it is clear that various modifications and combinations may be made to them without departing from the scope of this application. Correspondingly, the specification and accompanying drawings are merely example description of this application defined by the accompanying claims, and are considered as any of or all modifications, variations, combinations or equivalents that cover the scope of this application. It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, wherein the method comprises:
receiving first information respectively corresponding to at least one first node, wherein the first information comprises information about the first node and sensing information corresponding to a sensing link, the sensing information comprises information about N scatterers and/or information about M scatterer groups, N and M are positive integers, and the first node is a receiving node of a sensing signal on the sensing link;
determining a reference unit based on the first information respectively corresponding to the at least one first node; and
sending second information to each of the at least one first node, wherein the second information indicates location calibration values/a location calibration value of the scatterer and/or the scatterer group relative to the reference unit.

2. The method according to claim 1, wherein the location calibration value comprises a distance registration value and/or an angle registration value, and the distance registration value and/or the angle registration value indicate/indicates a coordinate error of the scatterer or the scatterer group.

3. The method according to claim 1 or 2, wherein the information about the first node comprises at least one of the following: an identifier of the sensing link, an identifier of the first node, an identifier of a sending node of the sensing signal on the sensing link, obtaining time information of the sensing information, or configuration information of the first node.

4. The method according to any one of claims 1 to 3, wherein the information about the scatterer comprises at least one of the following: an index of the scatterer, location coordinates of the scatterer, a speed of the scatterer, an angle of arrival or an angle of departure of a sensing signal corresponding to the scatterer, reliability of the scatterer, or a received power of the sensing signal corresponding to the scatterer.

5. The method according to any one of claims 1 to 4, wherein a correlation between attributes of any two scatterers in the scatterer group is greater than or equal to a preset threshold.

6. The method according to claim 5, wherein
the attribute of the scatterer comprises at least one of the following: location coordinates, a speed, or a direction; and/or
the correlation is indicated by at least one of the following: an offset, a covariance, or a Euclidean distance.

7. The method according to any one of claims 1 to 6, wherein the information about the scatterer group comprises at least one of the following: an index of the scatterer group, a location of the scatterer group, a contour of the scatterer group, a speed of the scatterer group, a category of the scatterer group, or an attribute of the scatterer group.

8. The method according to claim 7, wherein the contour of the scatterer group is indicated by at least one of the following: location coordinates of a center of the scatterer group, a size of the scatterer group, or a normal direction; or
the contour of the scatterer group is indicated by the following information: location coordinates of a plurality of scatterers at vertices in the scatterer group.

9. The method according to any one of claims 1 to 8, wherein the second information comprises information about the reference unit, and the information about the reference unit comprises location coordinates of the reference unit.

10. The method according to claim 9, wherein the information about the reference unit further comprises at least one of the following: an identifier of the reference unit, a speed of the reference unit, an angle of arrival or an angle of departure of a sensing signal corresponding to the reference unit, reliability of the reference unit, or a received power of the sensing signal corresponding to the reference unit.

11. The method according to any one of claims 1 to 8, wherein the second information comprises the location calibration value.

12. A communication method, wherein the method comprises:
sending first information to a second node, wherein the first information comprises information about a first node and sensing information corresponding to a sensing link, the sensing information comprises information about N scatterers and/or information about M scatterer groups, N and M are positive integers, the first node is a receiving node of a sensing signal on the sensing link, and the first information is used to determine a reference unit; and
receiving second information from the second node, wherein the second information indicates location calibration values/a location calibration value of the scatterer and/or the scatterer group relative to the reference unit.

13. The method according to claim 12, wherein the location calibration value comprises a distance registration value and/or an angle registration value, and the distance registration value and/or the angle registration value indicate/indicates a coordinate error of the scatterer or the scatterer group.

14. The method according to claim 12 or 13, wherein the information about the first node comprises at least one of the following: an identifier of the sensing link, an identifier of the first node, an identifier of a sending node of the sensing signal on the sensing link, obtaining time information of the sensing information, or configuration information of the first node.

15. The method according to any one of claims 12 to 14, wherein the information about the scatterer comprises at least one of the following: an index of the scatterer, location coordinates of the scatterer, a speed of the scatterer, an angle of arrival or an angle of departure of a sensing signal corresponding to the scatterer, reliability of the scatterer, or a received power of the sensing signal corresponding to the scatterer.

16. The method according to any one of claims 12 to 15, wherein a correlation between attributes of any two scatterers in the scatterer group is greater than or equal to a preset threshold.

17. The method according to claim 16, wherein
the attribute of the scatterer comprises at least one of the following: location coordinates, a speed, or a direction; and/or
the correlation is indicated by at least one of the following: an offset, a covariance, or a Euclidean distance.

18. The method according to any one of claims 12 to 17, wherein the information about the scatterer group comprises at least one of the following: an index of the scatterer group, a location of the scatterer group, a contour of the scatterer group, a speed of the scatterer group, a category of the scatterer group, or an attribute of the scatterer group.

19. The method according to claim 18, wherein the contour of the scatterer group is indicated by at least one of the following: location coordinates of a center of the scatterer group, a size of the scatterer group, or a normal direction; or
the contour of the scatterer group is indicated by the following information: location coordinates of a plurality of scatterers at vertices in the scatterer group.

20. The method according to any one of claims 12 to 19, wherein the second information comprises information about the reference unit, and the information about the reference unit comprises location coordinates of the reference unit.

21. The method according to claim 20, wherein the information about the reference unit further comprises at least one of the following: an identifier of the reference unit, a speed of the reference unit, an angle of arrival or an angle of departure of a sensing signal corresponding to the reference unit, reliability of the reference unit, or a received power of the sensing signal corresponding to the reference unit.

22. The method according to any one of claims 12 to 19, wherein the second information comprises the location calibration value.

23. A communication method, wherein the method comprises:
sending first request information to a mobility management network element, wherein the first request information is used to request to associate or disassociate a reference unit with or from a first location management network element, and location information of the reference unit is used to compensate for a positioning error; and
receiving first response information from the mobility management network element, wherein the first response information indicates whether association or disassociation of the reference unit is accepted.

24. The method according to claim 23, wherein when the first request information is used to request to associate the reference unit with the first location management network element, the first request information comprises a first identifier, and the first identifier is used to identify an association process of the reference unit.

25. The method according to claim 24, wherein the first request information further comprises at least one of the following:
an identifier of the reference unit, a cause for associating the reference unit, sensing reliability of the reference unit, the location information of the reference unit, or a status of the reference unit; and
the cause for associating the reference unit comprises initial association or association update, and the status of the reference unit comprises an on ON state or an off OFF state.

26. The method according to any one of claims 23 to 25, wherein when the first response information indicates that association of the reference unit is accepted, the first response information comprises a second identifier, and the second identifier is used for association update of the reference unit of the first location management network element.

27. The method according to any one of claims 23 to 26, wherein when the first response information indicates that association of the reference unit is rejected, the first response information comprises a route identifier of a second location management network element.

28. The method according to claim 23, wherein when the first request information is used to request to disassociate the reference unit from the first location management network element, the first request information comprises a second identifier, and the second identifier is an identifier that is returned in an association process of the reference unit and that is used for association update of the reference unit of the first location management network element.

29. The method according to claim 23 or 28, wherein when the first response information indicates that disassociation of the reference unit is accepted, the first response information comprises a fourth identifier, and the fourth identifier is a route identifier that is the same as an association identifier returned in the association process of the reference unit.

30. The method according to any one of claims 23 to 29, wherein the reference unit is a passive object, and/or the location information of the reference unit is obtained based on sensing.

31. A communication method, wherein the method comprises:
receiving first request information from a sensing node, wherein the first request information is used to request to associate or disassociate a reference unit with or from a first location management network element, and location information of the reference unit is used to compensate for a positioning error; and
when the sensing node is valid, sending second request information to the first location management network element, wherein the second request information is used to request to associate or disassociate the reference unit with or from the first location management network element.

32. The method according to claim 31, wherein the method further comprises:
receiving second response information from the first location management network element, wherein the second response information indicates whether association or disassociation of the reference unit is accepted; and
sending first response information to the sensing node, wherein the first response information indicates whether association or disassociation of the reference unit is accepted.

33. The method according to claim 31 or 32, wherein when the second response information indicates that disassociation of the reference unit is accepted, the second response information comprises a third identifier, and the third identifier is an association identifier returned in an association process of the reference unit.

34. The method according to any one of claims 31 to 33, wherein that the sensing node is valid comprises: the sensing node has permission for association or disassociation of the reference unit.

35. A communication method, wherein the method comprises:
receiving second request information from a mobility management network element, wherein the second request information is used to request to associate or disassociate a reference unit with or from a first location management network element, and location information of the reference unit is used to compensate for a positioning error; and
sending second response information to the mobility management network element, wherein the second response information indicates whether association or disassociation of the reference unit is accepted.

36. The method according to claim 35, wherein when the second request information is used to request to associate the reference unit with the first location management network element, the method further comprises:
sending third request information to a network repository network element, wherein the third request information is used to request to add information about the reference unit to information about the first location management network element.

37. A communication method, wherein the method comprises:
receiving positioning request information, wherein the positioning request information is used to request to position a target terminal device;
obtaining location information of at least one reference unit, wherein the location information of the reference unit is used to compensate for a positioning error; and
determining a location of the target terminal device based on an initial positioning location of the target terminal device, the location information of the at least one reference unit, and location information of at least one radio access network device, wherein the at least one radio access network device is configured to determine the initial positioning location.

38. The method according to claim 37, wherein the at least one reference unit comprises a first reference unit, and the first reference unit is a reference unit associated with a first location management network element; and
the first reference unit is located in a serving cell of the target terminal device, and/or the first reference unit is a reference unit closest to the initial positioning location in at least one reference unit associated with the first location management network element.

39. The method according to claim 37 or 38, wherein the at least one reference unit comprises a second reference unit, and the second reference unit is a reference unit associated with a second location management network element; and
the second reference unit is located in the serving cell of the target terminal device, and/or the second reference unit is a reference unit closest to the initial positioning location in at least one reference unit associated with the second location management network element.

40. A communication apparatus, wherein the apparatus comprises a processing module and a transceiver module;
the transceiver module is configured to receive first information respectively corresponding to at least one first node, wherein the first information comprises information about the first node and sensing information corresponding to a sensing link, the sensing information comprises information about N scatterers and/or information about M scatterer groups, N and M are positive integers, and the first node is a receiving node of a sensing signal on the sensing link;
the processing module is configured to determine a reference unit based on the first information respectively corresponding to the at least one first node; and
the transceiver module is further configured to send second information to each of the at least one first node, wherein the second information indicates location calibration values/a location calibration value of the scatterer and/or the scatterer group relative to the reference unit.

41. The communication apparatus according to claim 40, wherein the location calibration value comprises a distance registration value and/or an angle registration value, and the distance registration value and/or the angle registration value indicate/indicates a coordinate error of the scatterer or the scatterer group.

42. The communication apparatus according to claim 40 or 41, wherein the information about the first node comprises at least one of the following: an identifier of the sensing link, an identifier of the first node, an identifier of a sending node of the sensing signal on the sensing link, obtaining time information of the sensing information, or configuration information of the first node.

43. The communication apparatus according to any one of claims 40 to 42, wherein the information about the scatterer comprises at least one of the following: an index of the scatterer, location coordinates of the scatterer, a speed of the scatterer, an angle of arrival or an angle of departure of a sensing signal corresponding to the scatterer, reliability of the scatterer, or a received power of the sensing signal corresponding to the scatterer.

44. The communication apparatus according to any one of claims 40 to 43, wherein a correlation between attributes of any two scatterers in the scatterer group is greater than or equal to a preset threshold.

45. The communication apparatus according to claim 44, wherein
the attribute of the scatterer comprises at least one of the following: location coordinates, a speed, or a direction; and/or
the correlation is indicated by at least one of the following: an offset, a covariance, or a Euclidean distance.

46. The communication apparatus according to any one of claims 40 to 45, wherein the information about the scatterer group comprises at least one of the following: an index of the scatterer group, a location of the scatterer group, a contour of the scatterer group, a speed of the scatterer group, a category of the scatterer group, or an attribute of the scatterer group.

47. The communication apparatus according to claim 46, wherein the contour of the scatterer group is indicated by at least one of the following: location coordinates of a center of the scatterer group, a size of the scatterer group, or a normal direction; or
the contour of the scatterer group is indicated by the following information: location coordinates of a plurality of scatterers at vertices in the scatterer group.

48. The communication apparatus according to any one of claims 40 to 47, wherein the second information comprises information about the reference unit, and the information about the reference unit comprises location coordinates of the reference unit.

49. The communication apparatus according to claim 48, wherein the information about the reference unit further comprises at least one of the following: an identifier of the reference unit, a speed of the reference unit, an angle of arrival or an angle of departure of a sensing signal corresponding to the reference unit, reliability of the reference unit, or a received power of the sensing signal corresponding to the reference unit.

50. The communication apparatus according to any one of claims 40 to 47, wherein the second information comprises the location calibration value.

51. A communication apparatus, wherein the communication apparatus comprises a transceiver module;
the transceiver module is configured to send first information to a second node, wherein the first information comprises information about a first node and sensing information corresponding to a sensing link, the sensing information comprises information about N scatterers and/or information about M scatterer groups, N and M are positive integers, the first node is a receiving node of a sensing signal on the sensing link, and the first information is used to determine a reference unit; and
the transceiver module is further configured to receive second information from the second node, wherein the second information indicates location calibration values/a location calibration value of the scatterer and/or the scatterer group relative to the reference unit.

52. The communication apparatus according to claim 51, wherein the location calibration value comprises a distance registration value and/or an angle registration value, and the distance registration value and/or the angle registration value indicate/indicates a coordinate error of the scatterer or the scatterer group.

53. The communication apparatus according to claim 51 or 52, wherein the information about the first node comprises at least one of the following: an identifier of the sensing link, an identifier of the first node, an identifier of a sending node of the sensing signal on the sensing link, obtaining time information of the sensing information, or configuration information of the first node.

54. The communication apparatus according to any one of claims 51 to 53, wherein the information about the scatterer comprises at least one of the following: an index of the scatterer, location coordinates of the scatterer, a speed of the scatterer, an angle of arrival or an angle of departure of a sensing signal corresponding to the scatterer, reliability of the scatterer, or a received power of the sensing signal corresponding to the scatterer.

55. The communication apparatus according to any one of claims 51 to 54, wherein a correlation between attributes of any two scatterers in the scatterer group is greater than or equal to a preset threshold.

56. The communication apparatus according to claim 55, wherein
the attribute of the scatterer comprises at least one of the following: location coordinates, a speed, or a direction; and/or
the correlation is indicated by at least one of the following: an offset, a covariance, or a Euclidean distance.

57. The communication apparatus according to any one of claims 51 to 56, wherein the information about the scatterer group comprises at least one of the following: an index of the scatterer group, a location of the scatterer group, a contour of the scatterer group, a speed of the scatterer group, a category of the scatterer group, or an attribute of the scatterer group.

58. The communication apparatus according to claim 57, wherein the contour of the scatterer group is indicated by at least one of the following: location coordinates of a center of the scatterer group, a size of the scatterer group, or a normal direction; or
the contour of the scatterer group is indicated by the following information: location coordinates of a plurality of scatterers at vertices in the scatterer group.

59. The communication apparatus according to any one of claims 51 to 58, wherein the second information comprises information about the reference unit, and the information about the reference unit comprises location coordinates of the reference unit.

60. The communication apparatus according to claim 59, wherein the information about the reference unit further comprises at least one of the following: an identifier of the reference unit, a speed of the reference unit, an angle of arrival or an angle of departure of a sensing signal corresponding to the reference unit, reliability of the reference unit, or a received power of the sensing signal corresponding to the reference unit.

61. The communication apparatus according to any one of claims 51 to 58, wherein the second information comprises the location calibration value.

62. A communication apparatus, wherein the communication apparatus comprises a transceiver module;
the transceiver module is configured to send first request information to a mobility management network element, wherein the first request information is used to request to associate or disassociate a reference unit with or from a first location management network element, and location information of the reference unit is used to compensate for a positioning error; and
the transceiver module is further configured to receive first response information from the mobility management network element, wherein the first response information indicates whether association or disassociation of the reference unit is accepted.

63. The communication apparatus according to claim 62, wherein when the first request information is used to request to associate the reference unit with the first location management network element, the first request information comprises a first identifier, and the first identifier is used to identify an association process of the reference unit.

64. The communication apparatus according to claim 63, wherein the first request information further comprises at least one of the following:
an identifier of the reference unit, a cause for associating the reference unit, sensing reliability of the reference unit, the location information of the reference unit, or a status of the reference unit; and
the cause for associating the reference unit comprises initial association or association update, and the status of the reference unit comprises an on ON state or an off OFF state.

65. The communication apparatus according to any one of claims 62 to 64, wherein when the first response information indicates that association of the reference unit is accepted, the first response information comprises a second identifier, and the second identifier is used for association update of the reference unit of the first location management network element.

66. The communication apparatus according to any one of claims 62 to 65, wherein when the first response information indicates that association of the reference unit is rejected, the first response information comprises a route identifier of a second location management network element.

67. The communication apparatus according to claim 62, wherein when the first request information is used to request to disassociate the reference unit from the first location management network element, the first request information comprises a second identifier, and the second identifier is an identifier that is returned in an association process of the reference unit and that is used for association update of the reference unit of the first location management network element.

68. The communication apparatus according to claim 62 or 67, wherein when the first response information indicates that disassociation of the reference unit is accepted, the first response information comprises a fourth identifier, and the fourth identifier is a route identifier that is the same as an association identifier returned in the association process of the reference unit.

69. The communication apparatus according to any one of claims 62 to 68, wherein the reference unit is a passive object, and/or the location information of the reference unit is obtained based on sensing.

70. A communication apparatus, wherein the communication apparatus comprises a transceiver module;
the transceiver module is configured to receive first request information from a sensing node, wherein the first request information is used to request to associate or disassociate a reference unit with or from a first location management network element, and location information of the reference unit is used to compensate for a positioning error; and
when the sensing node is valid, the transceiver module is further configured to send second request information to the first location management network element, wherein the second request information is used to request to associate or disassociate the reference unit with or from the first location management network element.

71. The communication apparatus according to claim 70, wherein
the transceiver module is further configured to receive second response information from the first location management network element, wherein the second response information indicates whether association or disassociation of the reference unit is accepted; and
the transceiver module is further configured to send first response information to the sensing node, wherein the first response information indicates whether association or disassociation of the reference unit is accepted.

72. The communication apparatus according to claim 70 or 71, wherein when the second response information indicates that disassociation of the reference unit is accepted, the second response information comprises a third identifier, and the third identifier is an association identifier returned in an association process of the reference unit.

73. The communication apparatus according to any one of claims 70 to 72, wherein that the sensing node is valid comprises: the sensing node has permission for association or disassociation of the reference unit.

74. A communication apparatus, wherein the communication apparatus comprises a transceiver module;
the transceiver module is configured to receive second request information from a mobility management network element, wherein the second request information is used to request to associate or disassociate a reference unit with or from a first location management network element, and location information of the reference unit is used to compensate for a positioning error; and
the transceiver module is further configured to send second response information to the mobility management network element, wherein the second response information indicates whether association or disassociation of the reference unit is accepted.

75. The communication apparatus according to claim 74, wherein when the second request information is used to request to associate the reference unit with the first location management network element, the transceiver module is further configured to send third request information to a network repository network element, wherein the third request information is used to request to add information about the reference unit to information about the first location management network element.

76. A communication apparatus, wherein the communication apparatus comprises a transceiver module and a processing module;
the transceiver module is configured to receive positioning request information, wherein the positioning request information is used to request to position a target terminal device;
the processing module is configured to obtain location information of at least one reference unit, wherein the location information of the reference unit is used to compensate for a positioning error; and
the processing module is further configured to determine a location of the target terminal device based on an initial positioning location of the target terminal device, the location information of the at least one reference unit, and location information of at least one radio access network device, wherein the at least one radio access network device is configured to determine the initial positioning location.

77. The communication apparatus according to claim 76, wherein the at least one reference unit comprises a first reference unit, and the first reference unit is a reference unit associated with a first location management network element; and
the first reference unit is located in a serving cell of the target terminal device, and/or the first reference unit is a reference unit closest to the initial positioning location in at least one reference unit associated with the first location management network element.

78. The communication apparatus according to claim 76 or 77, wherein the at least one reference unit comprises a second reference unit, and the second reference unit is a reference unit associated with a second location management network element; and
the second reference unit is located in the serving cell of the target terminal device, and/or the second reference unit is a reference unit closest to the initial positioning location in at least one reference unit associated with the second location management network element.

79. A communication apparatus, wherein the communication apparatus comprises a module configured to perform the method according to any one of claims 1 to 22, comprises a module configured to perform the method according to any one of claims 23 to 30, comprises a module configured to perform the method according to any one of claims 31 to 34, comprises a module configured to perform the method according to claim 35 or 36, or comprises a module configured to perform the method according to any one of claims 37 to 39.

80. A communication apparatus, wherein the communication apparatus comprises a processor, and the processor is configured to run a computer program or instructions, so that the communication apparatus performs the method according to any one of claims 1 to 22, the communication apparatus performs the method according to any one of claims 23 to 30, the communication apparatus performs the method according to any one of claims 31 to 34, the communication apparatus performs the method according to claim 35 or 36, or the communication apparatus performs the method according to any one of claims 37 to 39.

81. A computer-readable storage medium, wherein the computer-readable storage medium stores computer instructions or a program, and when the computer instructions or the program is run on a computer, the method according to any one of claims 1 to 22 is performed, the method according to any one of claims 23 to 30 is performed, the method according to any one of claims 31 to 34 is performed, the method according to claim 35 or 36 is performed, or the method according to any one of claims 37 to 39 is performed.

82. A computer program product, wherein the computer program product comprises computer instructions, and when a part or all of the computer instructions are run on a computer, the method according to any one of claims 1 to 22 is performed, the method according to any one of claims 23 to 30 is performed, the method according to any one of claims 31 to 34 is performed, the method according to claim 35 or 36 is performed, or the method according to any one of claims 37 to 39 is performed.
